(19) Europäisches Patentamt
European Patent Office
Office européen des brevets

(11) EP 4 501 478 A1

(12) EUROPEAN PATENT APPLICATION
published in accordance with Art. 153(4) EPC

(43) Date of publication:
**05.02.2025 Bulletin 2025/06**

(21) Application number: **23781038.7**

(22) Date of filing: **31.03.2023**

(51) International Patent Classification (IPC):
***B09B 5/00*** *(2006.01)* ***C22B 1/02*** *(2006.01)*
***C22B 7/00*** *(2006.01)* ***C22B 23/00*** *(2006.01)*
***C22B 3/08*** *(2006.01)* ***C22B 3/22*** *(2006.01)*
***C22B 3/44*** *(2006.01)* ***B09B 3/70*** *(2022.01)*
***H01M 10/54*** *(2006.01)*

(52) Cooperative Patent Classification (CPC):
**B09B 3/70; B09B 5/00; C22B 1/02; C22B 3/08; C22B 3/22; C22B 3/44; C22B 7/00; C22B 23/00; H01M 10/54;** Y02P 10/20; Y02W 30/84

(86) International application number:
**PCT/JP2023/013470**

(87) International publication number:
**WO 2023/191030 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.03.2022 JP 2022059890**
**31.03.2022 JP 2022059909**
**31.03.2022 JP 2022059918**
**31.03.2022 JP 2022060254**

(71) Applicant: **Mitsubishi Materials Corporation**
**Tokyo 100-8117 (JP)**

(72) Inventors:
- **MIYAZAKI, Atsushi**
  **Iwaki-shi, Fukushima 971-8101 (JP)**
- **MURAOKA, Hiroki**
  **Iwaki-shi, Fukushima 971-8101 (JP)**

(74) Representative: **Gille Hrabal**
**Partnerschaftsgesellschaft mbB**
**Patentanwälte**
**Brucknerstraße 20**
**40593 Düsseldorf (DE)**

(54) **ELECTRODE MATERIAL LEACHING METHOD AND METHOD FOR SEPARATING COBALT AND NICKEL**

(57) This method for leaching an electrode material is a method for subjecting an electrode material of a lithium ion secondary battery to acid leaching, the method including a leaching step of reacting the electrode material of a lithium ion secondary battery with sulfuric acid to obtain a leachate in which metals contained in the electrode material are leached, in which the leaching step includes a sulfuric acid adding step of adding the sulfuric acid to the electrode material to obtain a sulfuric acid-added electrode material, a kneading step of kneading the sulfuric acid-added electrode material to form a leaching paste, and a diluting step of diluting the leaching paste with water.

EP 4 501 478 A1

FIG. 1

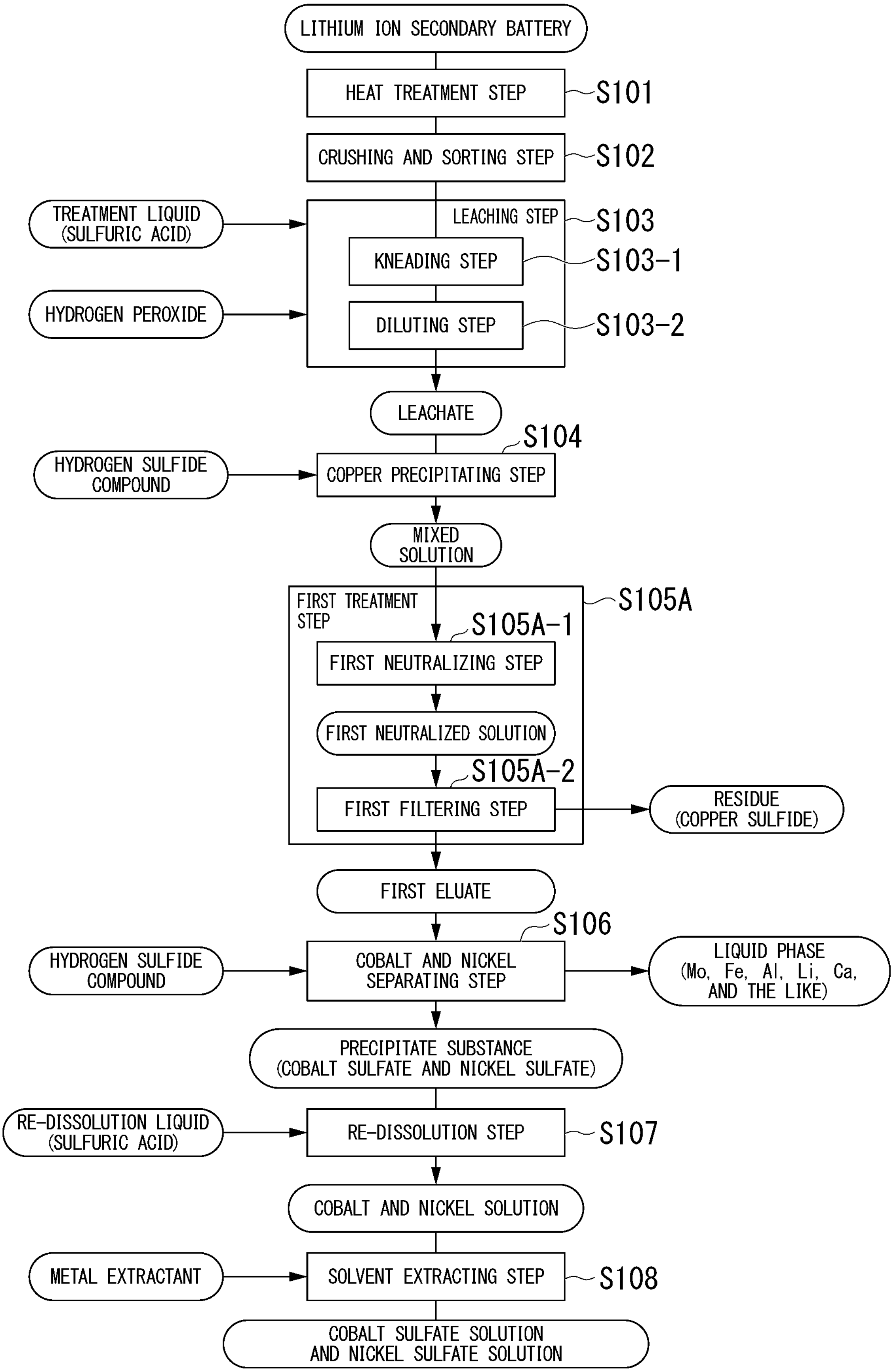
LITHIUM ION SECONDARY BATTERY
HEAT TREATMENT STEP
S101
CRUSHING AND SORTING STEP
S102
TREATMENT LIQUID (SULFURIC ACID)
LEACHING STEP
S103
KNEADING STEP
S103-1
HYDROGEN PEROXIDE
DILUTING STEP
S103-2
LEACHATE
S104
HYDROGEN SULFIDE COMPOUND
COPPER PRECIPITATING STEP
MIXED SOLUTION
FIRST TREATMENT STEP
S105A
S105A-1
FIRST NEUTRALIZING STEP
FIRST NEUTRALIZED SOLUTION
S105A-2
FIRST FILTERING STEP
RESIDUE (COPPER SULFIDE)
FIRST ELUATE
S106
HYDROGEN SULFIDE COMPOUND
COBALT AND NICKEL SEPARATING STEP
LIQUID PHASE (Mo, Fe, Al, Li, Ca, AND THE LIKE)
PRECIPITATE SUBSTANCE (COBALT SULFATE AND NICKEL SULFATE)
RE-DISSOLUTION LIQUID (SULFURIC ACID)
RE-DISSOLUTION STEP
S107
COBALT AND NICKEL SOLUTION
METAL EXTRACTANT
SOLVENT EXTRACTING STEP
S108
COBALT SULFATE SOLUTION AND NICKEL SULFATE SOLUTION

## Description

### TECHNICAL FIELD

The present invention relates to a method for leaching an electrode material in which an electrode material of a lithium ion secondary battery is leached, and a method for separating cobalt and nickel using the same.

The present application claims priority on Japanese Patent Application No. 2022-059890, Japanese Patent Application No. 2022-059909, Japanese Patent Application No. 2022-059918, and Japanese Patent Application No. 2022-060254, which were filed on March 31, 2022, the contents of which are incorporated herein by reference.

### BACKGROUND ART

A lithium ion secondary battery has been used as a power source in a wide range of fields, from small power sources for various electronic devices and the like to large power sources for electric vehicles and the like. In a case where such a lithium ion secondary battery is discarded, it is required to recover and reuse useful metals.

The lithium ion secondary battery is formed by fractionating an anode material and a cathode material with a separator such as porous polypropylene, stacking these members in a layer shape, and enclosing these members together with an electrolyte such as lithium hexafluorophosphate ($LiPF_6$) and an electrolytic solution in a case made of aluminum, stainless steel, or the like.

The anode material of the lithium ion secondary battery is formed by applying an anode active material such as graphite, which has been mixed with a binder, onto an anode current collector consisting of a copper foil or the like. In addition, the cathode material is formed by applying a cathode active material such as lithium manganate, lithium cobalt oxide, and lithium nickel oxide, which has been mixed with a binder, onto a cathode current collector consisting of an aluminum foil or the like.

Such a cathode active material of the lithium ion secondary battery contains a large amount of cobalt and nickel, but a cathode active material, which has been crushed and separated in advance in recycling process, contains manganese, copper, aluminum, lithium, and the like, in addition to cobalt and nickel. Therefore, in order to separate and recover cobalt and nickel from the lithium ion secondary battery with a high yield, it is necessary to accurately remove metals other than these metals.

In the related art, as a method for separating and recovering cobalt and nickel contained in a lithium ion secondary battery, for example, Patent Document 1 discloses a method for recovering cobalt and nickel, in which an electrode material of the lithium ion secondary battery is subjected to acid leaching using sulfuric acid to produce a leachate, sulfide is added to the leachate to precipitate copper sulfide, and cobalt and nickel are recovered from a solution after precipitating an aluminum hydroxide and a manganese oxide.

In addition, in the leaching step of performing acid leaching of the electrode material in such a method for recovering cobalt and nickel, in order to convert trivalent or tetravalent cobalt or nickel, which is hardly dissolved in the sulfuric acid, into divalent cobalt or nickel, which is more easily dissolved in the sulfuric acid, hydrogen peroxide is added as a reducing agent.

However, in the leaching step of the recovery method of Patent Document 1 described above, it is impossible to detect an end point of a reduction reaction by the addition of hydrogen peroxide. Therefore, in order to reliably complete the reduction reaction in the leaching step, there is a problem that treatment cost is increased by excessively adding the hydrogen peroxide, or the like.

In order to solve such a problem, for example, Patent Document 2 discloses that sodium sulfate of sodium hydrogen sulfate, which is capable of reducing the trivalent or tetravalent cobalt or nickel and measuring a reducing state by an oxidation reduction potential (ORP), is used as the reducing agent in the leaching step.

In addition, in the related art, regarding the method for separating and recovering cobalt and nickel contained in a lithium ion secondary battery, for example, Patent Documents 1 and 3 disclose, as a method for recovering valuable metals from a used lithium ion secondary battery, a recovery method in which a cathode active material is taken out from the lithium ion secondary battery, metals are leached from the cathode active material by acid leaching to obtain a leachate, and cobalt and nickel are separated from the leachate by solvent extraction.

### Citation List

#### Patent Documents

Patent Document 1: Japanese Unexamined Patent Application, First Publication No. 2015-183292

Patent Document 2: Japanese Unexamined Patent Application, First Publication No. 2014-019909
Patent Document 3: Japanese Unexamined Patent Application, First Publication No. 2007-122885

SUMMARY OF INVENTION

Technical Problem

However, in the leaching step of leaching the electrode material with acid to produce a leachate of the recovery method disclosed in Patent Document 1, since the main component of the electrode material is hydrophobic carbon derived from an anode material, the electrode material is hardly mixed with sulfuric acid and water, and further, due to gas generated during the acid leaching, a part of the electrode material floats up as a hard foam, so that a reaction between the electrode material and the sulfuric acid is slow and a reaction time is long.
In addition, in the leaching step of leaching the electrode material with acid to produce a leachate of the recovery method disclosed in Patent Document 1, since the part of the electrode material floats up as a hard foam due to the gas generated by the reaction between the main component of the electrode material and the sulfuric acid, the reaction between the electrode material and sulfuric acid is slow and the reaction time is long.
As a result, there is a problem that the leaching step is prolonged and it is necessary to add an excess amount of sulfuric acid equal to or more than an equivalent amount of the reaction in order to proceed with the reaction.
The present invention has been made in view of the above-described circumstances, and an objective of the present invention is to provide a method for leaching an electrode material in which it is possible to leach an electrode material contained in a lithium ion secondary battery with acid efficiently and in a short time, without using an excessive amount of the acid, and to provide a method for separating cobalt and nickel, including the leaching method.
In addition, in the metal leaching method disclosed in Patent Document 2, the sodium sulfate or sodium hydrogen sulfate, used as the reducing agent in the leaching step, is more expensive than the hydrogen peroxide as a chemical, and it is difficult to apply the leaching to an electrode material of a lithium ion secondary battery, which is expected to be wasted in large amounts, from the viewpoint of treatment cost.
Moreover, since the sodium sulfate or sodium hydrogen sulfate reacts with sulfuric acid added simultaneously to generate sulfur dioxide gas, there is also a problem of a complicated treatment equipment, such as a need to provide a gas treatment equipment separately, and high cost.
The present invention has been made in view of the above-described circumstances, and an objective of the present invention is to provide a leaching method in which it is possible to leach an electrode material contained in a lithium ion secondary battery with acid efficiently and at a low cost, without using an excessive amount of a reducing agent, and to provide a method for separating cobalt and nickel, including this leaching method.
In addition, in many cases, an electrode active material contains a compound which exhibits alkalinity in a case of being dissolved in water or the like. Therefore, in the recovery methods disclosed in Patent Documents 1 and 3, in a case where the electrode active material is leached with acid, the electrode active material is dissolved using a large amount of sulfuric acid.
Moreover, in a subsequent step after the leaching step, in order to neutralize such an acidic leachate, the pH is adjusted using a large amount of an alkali metal hydroxide such as sodium hydroxide. As described above, in the recovery methods in the related art, since it is necessary to adjust liquid properties in each treatment step over a wide range from strong acidity to strong alkalinity, a large amount of chemical liquid such as an acid and an alkali compound is required, and there is a problem that the treatment cost in the separation and recovery of cobalt and nickel contained in the lithium ion secondary battery is increased.
The present invention has been made in view of the above-described circumstances, and an objective of the present invention is to provide a method for separating cobalt and nickel, in which it is possible to recover cobalt and nickel from a lithium ion secondary battery at a low cost.

Solution to Problem

The invention of the present application includes the following aspects.

(1) A method for leaching an electrode material, in which the electrode material of a lithium ion secondary battery is subjected to acid leaching, the method including:

a leaching step of reacting the electrode material of the lithium ion secondary battery with sulfuric acid to obtain a leachate in which metals contained in the electrode material are leached;
in which the leaching step includes a sulfuric acid adding step of adding the sulfuric acid to the electrode material to obtain a sulfuric acid-added electrode material, a kneading step of kneading the sulfuric acid-added electrode material to form a leaching paste, and a diluting step of diluting the leaching paste with water.

(2) The leaching step may further include a step of adding an antifoaming agent containing a saturated aliphatic alcohol having 8 or less carbon atoms, to the electrode material, the sulfuric acid-added electrode material, the leaching paste, or the leachate.
(3) The leaching step may further include an iron powder adding step of adding iron powder to the leachate, and an ORP measuring step of measuring an oxidation reduction potential after the addition of the iron powder to specify a stable oxidation reduction potential which is an oxidation reduction potential at a point in time when an increase in oxidation reduction potential is not observed, and the iron powder adding step and the ORP measuring step may be repeated until the stable oxidation reduction potential is equal to or less than a predetermined value.
(4) When a mass (g) of the electrode material is denoted as EA, a volume (mL) of the sulfuric acid is denoted as SV, and a concentration (mol/L) of the sulfuric acid is denoted as SC, the kneading in the kneading step may be performed to satisfy 1 ≤ (SV/EA) <_ 2 and 5.5 EA ≤ (SC × SV) <_ 10.3 EA.
(5) In at least one of the kneading step and the diluting step, hydrogen peroxide may be further added.
(6) In the diluting step, hydrogen peroxide may be added after a liquid temperature after the dilution is adjusted to be in a range of 50°C or higher and 60°C or lower and a pH is adjusted to be 2.0 or less.
(7) The diluting step may further include a step of further adding sulfuric acid to adjust a pH of the diluted leachate to be 2.0 or less.
(8) In at least one of the kneading step and the diluting step, an alcohol may be further added.
(9) The alcohol may have 4 or more and 7 or less carbon atoms.
(10) In the leaching step, the antifoaming agent may be added after adding the sulfuric acid to the electrode material.
(11) In the leaching step, hydrogen peroxide may be further added after a liquid temperature may be adjusted to be in a range of 50°C or higher and 60°C or lower.
(12) In the leaching step, the antifoaming agent may be added after adding the hydrogen peroxide.
(13) The leaching step may be a step including the kneading step of kneading the sulfuric acid and the electrode material to form the leaching paste, and the diluting step of adding water to the leaching paste to dilute the leaching paste.
(14) The predetermined value of the stable oxidation reduction potential may be 400 mV.
(15) The iron powder adding step and the ORP measuring step may be performed with a liquid temperature in a range of 50°C or higher and 70°C or lower.
(16) The iron powder added in the iron powder adding step may be iron powder having an average particle size value (D50) of 1 mm or less.
(17) The leaching method according to (3), in which, in the sulfuric acid adding step, a pH is adjusted to be in a range of 1.5 or more and 2.0 or less.
(18) A method for separating cobalt and nickel, in which cobalt and nickel are separated from a lithium ion secondary battery, the method including:

a crushing and sorting step of crushing and classifying the lithium ion secondary battery to obtain an electrode material containing at least cobalt, nickel, copper, and lithium;
a leaching step of producing a leachate by the method for leaching an electrode material according to any one of (1) to (17);
a copper precipitating step of adding a hydrogen sulfide compound to the leachate and stirring a mixture to precipitate the copper as copper sulfide;
either one of a first treatment step which includes, in the following order, a first neutralizing step of adding an alkali metal hydroxide to a mixed solution containing the precipitate obtained in the copper precipitating step to adjust a pH and obtain a first neutralized solution, and a first filtering step of subjecting the first neutralized solution to a solid-liquid separation to obtain a first eluate containing the cobalt and the nickel, and a residue containing the copper sulfide, or
a second treatment step which includes, in the following order, a second filtering step of subjecting a mixed solution containing the precipitate obtained in the copper precipitating step to a solid-liquid separation to obtain a second eluate containing the cobalt and the nickel, and a residue containing the copper sulfide, and a second neutralizing step of adding an alkali metal hydroxide to the second eluate to adjust a pH and obtain a second neutralized solution; and
a cobalt and nickel separating step of adding a hydrogen sulfide compound to the first eluate obtained in the first treatment step or to the second neutralized solution obtained in the second treatment step, stirring a mixture, and subjecting the mixture to a solid-liquid separation to obtain a precipitate substance containing cobalt sulfide and nickel sulfide, and a residual liquid containing the lithium.

(19) The method for separating cobalt and nickel according to (18), further including:
an iron separating step of adding a hypochlorite compound to either one of the first eluate obtained in the first treatment step, the second neutralized solution obtained in the second treatment step, or a re-dissolution liquid obtained by dissolving the precipitate substance obtained in the cobalt and nickel separating step to separate a precipitate substance containing iron.
(20) The method for separating cobalt and nickel according to (18) of (19), further including, after the crushing and sorting step and before the leaching step:

a washing step of washing the electrode material with water and recovering an alkaline washing discharge liquid after the washing of the electrode material,
in which, in the first neutralizing step, the washing discharge liquid is further added to the mixed solution, and in the second neutralizing step, the washing discharged liquid is further added to the second eluate.

(21) The first treatment step may be performed as a subsequent step of the copper precipitating step.
(22) As a pre-step of the crushing and sorting step, a heat treatment step of heating the lithium ion secondary battery to carry out a heat treatment may be included.
(23) In the iron separating step, the precipitate substance containing iron may be separated from the re-dissolution liquid.
(24) In the iron separating step, when the hypochlorite compound is added to the re-dissolution liquid, an addition end point of the hypochlorite compound may be determined by the following expression 1 which shows a relationship between an oxidation reduction potential (ORP) and a pH.

$$ORP = -153.18 \times pH + 1577.2 \pm 30\ (mV) \ldots (1)$$

(25) The washing discharge liquid may have a pH of 9 or more.
(26) The washing step may be a step of putting the electrode material in water and stirring a mixture in a range of 0.33 hours or more and 6 hours or less.
(27) An antifoaming agent containing a saturated aliphatic alcohol having 8 of less carbon atoms may be further added in a treatment liquid used in the leaching step.
(28) The leaching step may be a step including the kneading step of kneading the sulfuric acid and the electrode material washed in the washing step to form the leaching paste, and the diluting step of adding water to the leaching paste to dilute the leaching paste.
(29) A re-dissolution step of adding a re-dissolution liquid containing sulfuric acid to the precipitate substance separated in the cobalt and nickel separating step, stirring a mixture, and then subjecting the mixture to a solid-liquid separation to obtain a cobalt and nickel solution containing the cobalt and the nickel; and a solvent extracting step of adding an extractant solution to the cobalt and nickel solution to obtain a cobalt extract and a nickel extract may be further included.

## Advantageous Effects of Invention

According to the present invention, it is possible to provide a method for leaching an electrode material in which it is possible to leach an electrode material contained in a lithium ion secondary battery with acid efficiently and in a short time, without using an excessive amount of the acid, and to provide a method for separating cobalt and nickel, including this leaching method.
According to the present invention, it is possible to provide a leaching method in which it is possible to leach an electrode material contained in a lithium ion secondary battery with acid efficiently and at a low cost, without using an excessive amount of a reducing agent, and to provide a method for separating cobalt and nickel, including this leaching method.
According to the present invention, it is possible to provide a method for separating cobalt and nickel, in which it is possible to separate cobalt and nickel contained in a lithium ion secondary battery from other metals with high accuracy and at a low cost, and it is possible to recover cobalt and nickel from the lithium ion secondary battery at a low cost.

## BRIEF DESCRIPTION OF DRAWINGS

[FIG. 1] A flowchart representing a method for separating cobalt and nickel, which includes a method for leaching an electrode material of Embodiment 1-1 according to a first embodiment of the present invention, in a stepwise manner.

[FIG. 2] A flowchart representing a method for separating cobalt and nickel, which includes a leaching method of Embodiment 1-2 according to the first embodiment of the present invention, in a stepwise manner.

[FIG. 3] A graph representing an appropriate range of an added sulfuric acid volume and a concentration based on Expression 1 and Expression 2.

[FIG. 4] A flowchart representing a method for separating cobalt and nickel, which includes a method for leaching an electrode material of Embodiment 2-1 according to a second embodiment of the present invention, in a stepwise manner.

[FIG. 5] A flowchart representing a method for separating cobalt and nickel, which includes a leaching method of Embodiment 2-2 according to the second embodiment of the present invention, in a stepwise manner.

[FIG. 6] A flowchart representing a method for separating cobalt and nickel, which includes a leaching method of Embodiment 3-1 according to a third embodiment of the present invention, in a stepwise manner.

[FIG. 7] A flowchart representing a method for separating cobalt and nickel, which includes a leaching method of Embodiment 3-2 according to the third embodiment of the present invention, in a stepwise manner.

[FIG. 8A] A graph representing a change in ORP due to addition of iron powder at a liquid temperature of 60°C; a solid line in a vertical direction of the graph indicates a timing at which 0.2 g of the iron powder is added; and a dotted line in the vertical direction of the graph indicates a timing at which 0.05 g of the iron powder is added.

[FIG. 8B] A graph representing a change in ORP due to addition of iron powder at a liquid temperature of 50°C; and a solid line and a dotted line in a vertical direction of the graph have the same definitions as in FIG. 8A.

[FIG. 8C] A graph representing a change in ORP due to addition of iron powder at a liquid temperature of 40°C; and a solid line and a dotted line in a vertical direction of the graph have the same definitions as in FIG. 8A.

[FIG. 9] A flowchart representing a method for recycling an electrode material of a lithium ion secondary battery, including a method for separating cobalt and nickel of Embodiment 4-1 according to a fourth embodiment of the present invention, in a stepwise manner.

[FIG. 10] A flowchart representing a method for recycling an electrode material of a lithium ion secondary battery, including a method for separating cobalt and nickel of Embodiment 4-2 according to the fourth embodiment of the present invention, in a stepwise manner.

## DESCRIPTION OF EMBODIMENTS

Hereinafter, a method for leaching an electrode material according to embodiments of the present invention and a method for separating cobalt and nickel, including this method for leaching an electrode material, will be described with reference to the drawings. Each embodiment to be described below is specifically described for better understanding of the features of the invention, and does not limit the present invention unless otherwise specified.

### [First embodiment]

#### (Embodiment 1-1)

FIG. 1 is a flowchart representing a method for separating cobalt and nickel, which includes a method for leaching an electrode material according to an embodiment 1-1 of the present invention, in a stepwise manner.

#### (Heat treatment step S101)

As a pre-treatment step of separating an electrode material constituting a discarded lithium ion secondary battery (hereinafter, referred to as a discarded LIB), the discarded LIB is subjected to a heat treatment by being heated by superheated steam to, for example, approximately 500°C using a heating furnace.

The heat treatment may be performed in a vacuum or at normal pressure, but heating in an inert atmosphere not containing oxygen is preferable. Due to the presence of a binder and an electrolytic solution, the discarded LIB has a strong adhesive force between a cathode active material or anode active material and an aluminum foil or copper foil which is a current collector. Therefore, in a case of carrying out the heat treatment step at 400°C or higher, separation between the active material and the current collector is facilitated. In a case of setting the heating temperature of the discarded LIB to be 650°C or lower, it is possible to prevent difficulty in taking out only the active material, which is caused by aluminum being melted and then cooled and solidified while entangling the active material.

#### (Crushing and sorting step S102)

Next, the discarded LIB after the heat treatment is crushed, and then the electrode material is sorted and separated by sieving. The discarded LIB is crushed using, for example, a twin-shaft shear crusher or a hammer mill.

Then, the crushed discarded LIB is classified using a sieve having a suitable mesh size; and a battery container, an aluminum foil, a copper foil, and a nickel terminal are recovered as an upper-side product of the sieve, and the electrode material containing the cathode active material ($LiCoO_2$ or the like) and the anode active material (graphite) are recovered as a lower-side product of the sieve. It is sufficient that such an electrode material has passed through a sieve having, for example, a mesh size of approximately 0.5 mm.

The separated electrode material mainly contains cobalt, nickel, manganese, copper, iron, aluminum, lithium, calcium, and the like, which are constitutional materials or impurities of the cathode active material, and contains carbon which is a constitutional material of the anode active material.

(Leaching step S103)

Next, in a leaching step S103 constituting the method for leaching an electrode material according to the present embodiment, the electrode material separated in the crushing and sorting step S102 is subjected to acid leaching with a treatment liquid containing sulfuric acid to obtain a leachate.

The leaching step S103 is performed through a two-stage process including a kneading step S103-1 of kneading the electrode material with a small amount of sulfuric acid (treatment liquid) to form a leaching paste, and a diluting step S103-2 of diluting the obtained leaching paste with water to form a leachate.

In the kneading step S103-1, for example, the electrode material is kneaded with a small amount of a sulfuric acid solution having a concentration of approximately 45% to 47% by mass. Specifically, for example, the electrode material is put into a container, a small amount of sulfuric acid is added thereto, and the electrode material and the sulfuric acid are kneaded with each other until the mixture becomes pasty, using a rubber spatula, a glass rod, or the like. At this time, the kneaded material foams due to gas generated when the electrode material is dissolved by the sulfuric acid, but it is preferable to knead the mixture such that the generated foams are physically crushed. The kneading can also be performed using a kneading machine having a defoaming function, for example, a decompressor-type kneading machine.

In the kneading step S103-1, by kneading the mixture in a paste state, contact between the electrode material and the sulfuric acid is facilitated as compared with stirring in a liquid state in the related art. In addition, air bubbles generated by the leaching are crushed by the kneading, and the electrode material and the sulfuric acid are to be compatible with each other. As a result, the electrode material can be efficiently leached with acid in a short time.

It is preferable that a mixing ratio of the electrode material used in the kneading step S103-1 and the sulfuric acid added thereto satisfies the following expression 1 and the following expression 2, when a mass (g) of the electrode material is denoted as EA, a volume (mL) of the sulfuric acid is denoted as SV, and a concentration (mol/L) of the sulfuric acid is denoted as SC.

$$1 \leq (SV/EA) \leq 2 \ldots (1)$$

$$5.5EA \leq (SC \times SV) \leq 10.3EA \ldots (2)$$

In a case where SV/EA of the expression 1 is less than 1, the kneaded material is too hard to be formed into a pasty kneaded material (leaching paste). On the other hand, in a case where SV/EA is more than 2, flowability is too high, and thus the kneaded material becomes a liquid substance.

In addition, in a case where SC $\times$ SV of the expression 2 is less than 5.5EA, the amount of sulfate ions is insufficient to sufficiently leach the active materials contained in the electrode material. On the other hand, in a case where SC $\times$ SV is more than 10.3EA, the amount of sulfate ions is excessive, that is, the amount of the sulfuric acid which does not contribute to the leaching is too large, and there is a concern that unnecessary treatment cost is generated.

FIG. 3 is a graph representing an appropriate range of an addition amount and a concentration of the sulfuric acid based on the expression 1 and expression 2. In FIG. 3, EA = 1. According to FIG. 3, by setting the addition amount and the concentration of the sulfuric acid in a region to be an appropriate range, the leaching paste can be formed, and the active materials contained in the electrode material can be sufficiently leached and unnecessary sulfuric acid for the reaction can be reduced.

In the kneading step S103-1, in addition to adding the sulfuric acid to the electrode material, hydrogen peroxide can be further added.

Co and Ni contained in the electrode material also include a trivalent of tetravalent state which is hardly dissolved in the sulfuric acid; and therefore, by adding the hydrogen peroxide as a reducing agent, Co and Ni can be reduced to a divalent state which is more easily dissolved in the sulfuric acid. The hydrogen peroxide may be added in a state of hydrogen peroxide water having a concentration of 30% to 35% by mass.

In a case where the hydrogen peroxide is added in the kneading step S103-1, in order to exhibit reducing properties of the hydrogen peroxide, it is preferable that a temperature of the kneaded material is set to be 50°C or higher. In a case where the temperature is lower than 50°C, reaction time is prolonged, and in a case where the temperature is higher than 60°C, unnecessary heat is applied; and as a result, thermal energy is wasted.

In the kneading step S103-1, when the sulfuric acid is added to the electrode material, the kneaded material is usually heated by positive reaction heat to be higher than room temperature, so that, depending on the conditions, it may not be necessary to perform an external heating operation.

Furthermore, in the kneading step S103-1, an alcohol can also be added. As the alcohol to be added, for example, saturated aliphatic alcohols having 8 or less carbon atoms, such as ethanol and butanol, are exemplary examples. Since such an alcohol has a hydrophobic group and a hydrophilic group, the alcohol facilitates the kneading by increasing an affinity between the hydrophobic electrode active material and the sulfuric acid containing water, and reduces foaming during the kneading by antifoaming properties; and thereby, the formation of a kneaded paste is facilitated.

In the diluting step S103-2, water, for example, distilled water is added to the leaching paste obtained in the kneading step S103-1, and the mixture is stirred to produce a leachate. At this time, in a case where the leaching paste is diluted such that a pH of the leachate is 2.0 or less, components of the electrode material, soluble in the sulfuric acid, are in a substantially dissolved state.

In a case where the leaching paste is diluted with water in the diluting step S103-2 and the pH of the leachate exceeds 2, it is preferable to further add sulfuric acid to adjust the pH to be 2.0 or less. In a case where the pH of the leachate is 2 or less, it is not necessary to adjust the pH in the subsequent copper precipitating step S104.

In the diluting step S103-2, hydrogen peroxide can be further added. In a case where the hydrogen peroxide is added in the diluting step S103-2, in order to exhibit reducing properties of the hydrogen peroxide, it is preferable that a temperature of the leachate is set to be in a range of 50°C or higher and 60°C or lower. In a case where the temperature is lower than 50°C, reaction time is prolonged, and in a case where the temperature is higher than 60°C, unnecessary heat is applied; and as a result, thermal energy is wasted. In addition, it is preferable that the hydrogen peroxide is added thereto after the pH of the leachate is adjusted to be 2.0 or less.

By adding the hydrogen peroxide in the diluting step S103-2, trivalent or tetravalent Co or Ni, contained in the electrode material, can be reduced to divalent Co or Ni, which is easily dissolved in the sulfuric acid, and the solubility of Co and Ni can be increased. The hydrogen peroxide may be added in a state of an aqueous solution, that is, in a state of hydrogen peroxide water having a concentration of 30% to 35% by mass.

By the above-described leaching step S103, it is possible to obtain a leachate having a pH of 2.0 or less, in which the active materials of the electrode material are leached. Since carbon contained in the electrode material is not leached, the carbon remains in a solid state as carbon residue.

In this way, with the method for leaching an electrode material according to the present embodiment, in the leaching step S103, the electrode material can be efficiently leached with acid in a short time without using an excessive amount of sulfuric acid, by passing through the two-stage process of the kneading step S103-1 and the diluting step S103-2.

(Copper precipitating step S104)

Next, a hydrogen sulfide compound is added to the leachate obtained in the leaching step S103, and the mixture is stirred to obtain a mixed solution in which an eluate containing cobalt and nickel and a precipitate containing copper sulfide (CuS) are mixed.

In the present invention, the hydrogen sulfide compound means a compound which includes sulfur content and takes a form of $H_2S$, $HS^-$, or $S^{2-}$ in a case of being dissolved in water.

As the hydrogen sulfide compound used in the copper precipitating step S104, water-soluble alkali metal hydrogen sulfide, that is, an aqueous solution of sodium hydrogen sulfide (NaSH) is used in the present embodiment. As a specific example of the copper precipitating step S104, after diluting the leachate with ion exchange water, an aqueous solution of sodium hydrogen sulfide is added to the diluted leachate with stirring.

The addition of the aqueous solution of sodium hydrogen sulfide is performed, for example, until an oxidation/reduction potential (vs Ag/AgCl) is to be 0 mV or less. By adding the sodium hydrogen sulfide until the oxidation/reduction potential is to be 0 mV or less, it is possible to precipitate almost the entire amount of copper contained in the leachate.

It is preferable that the pH of the leachate is maintained at 2.0 or less from the start to the end of the addition of the hydrogen sulfide compound. In a case where the pH of the leachate exceeds 2.0, there is a risk that sulfides of cobalt and nickel are generated, and thus a recovery rate of these sulfides to the eluate decreases.

In addition to the sodium hydrogen sulfide, the hydrogen sulfide compound may be, for example, sodium sulfide, sodium thiosulfate, or sodium dithionite.

By adding the hydrogen sulfide compound to the leachate, among the metal components dissolved in the leachate, copper and sulfur react with each other to generate copper sulfide (CuS), which is subsequently precipitated. On the other hand, metal components (cobalt, nickel, manganese, iron, aluminum, lithium, calcium, and the like) excluding the copper remain in the liquid phase, whereby an eluate containing cobalt and nickel is obtained.

(First treatment step S105A)

Next, as a first treatment step S105A, a first neutralizing step S105A-1 and a first filtering step S105A-2 are performed in this order.

In the first neutralizing step S105A-1, the pH of the mixed solution containing the precipitate obtained in the copper precipitating step S104 is adjusted by adding an alkali metal hydroxide; and thereby, a first neutralized solution is obtained.

In the copper precipitating step S104 as the pre-step, the pH of the leachate is maintained at 2.0 or less from the start to the end of the addition of the hydrogen sulfide compound; and therefore, there is a risk that the hydrogen sulfide compound and cobalt and nickel may hardly react with each other in this state in the subsequent cobalt and nickel separating step S106, but the pH of the eluate decreases as the hydrogen sulfide compound is added. After the pH adjustment, in a case where the pH at the start of the addition of the hydrogen sulfide compound is less than 3.0, the pH excessively decreases before the addition of the hydrogen sulfide compound is completed; and as a result, it is necessary to adjust the pH again. Therefore, it is more efficient to adjust the pH to be 3.0 or more in the pre-step of the cobalt and nickel separating step S106.

In addition, it takes a long time to adjust the pH in a case where the pH is adjusted to be a value exceeding 4.0, but the addition of the hydrogen sulfide compound immediately decreases the pH to be 4.0 or less, which is inefficient. Therefore, a range of 3.0 to 4.0 is desirable as the pH adjustment range.

In addition, in the first neutralizing step S105A-1, by using sodium hydroxide (NaOH) to adjust the pH of the mixed solution containing the precipitate obtained in the copper precipitating step S104 to be approximately 3.0 to 4.0, aluminum contained in the mixed solution can be formed into aluminum hydroxide ($Al(OH)_3$) and precipitated.

In the first neutralizing step S105A-1, which is the pre-treatment for the pH adjustment of the cobalt and nickel separating step S106, as a pH adjustment liquid, the sodium hydroxide (NaOH) or potassium hydroxide (KOH) can be used, and an acid, for example, sulfuric acid can also be used as long as the pH exceeds 4.0. In the present embodiment, the pH of the eluate is adjusted to be in a range of 3.0 to 4.0, for example, 3.5.

Next, in the first filtering step S105A-2, the first neutralized solution obtained in the first neutralizing step S105A-1 is subjected to a solid-liquid separation to separate a first eluate containing cobalt and nickel and a residue containing the copper sulfide (CuS). As a result, a solid phase containing the carbon residue generated in the leaching step S103, the precipitate residue including the copper sulfide (CuS) generated in the copper precipitating step S104, and the aluminum hydroxide ($Al(OH)_3$) generated in the first neutralizing step S105A-1 is separated from the first eluate (liquid phase). The saturated aliphatic alcohol having 8 or less carbon atoms, contained in the antifoaming agent used in the leaching step S103, migrates to the first eluate.

In the present embodiment, the carbon residue generated in the leaching step S103 is also filtered by the solid-liquid separation in the first filtering step S105A-2, but the carbon residue can also be separated in advance by performing a solid-liquid separation in the leaching step S103 before the first filtering step S105A-2.

The solid phase separated in the first filtering step S105A-2 may be repulped (purified by adding water to the solid phase to resuspend the solid phase and then dehydrating the solid phase), or may be treated as a waste by washing the cake.

(Cobalt and nickel separating step S106)

Next, by adding a water-soluble hydrogen sulfide compound to the first eluate obtained in the first treatment step S 105A, cobalt and nickel contained in the eluate are respectively formed into water-insoluble cobalt sulfide (CoS) and nickel sulfide (NiS) and precipitated.

As the hydrogen sulfide compound for sulfurizing cobalt and nickel, for example water-soluble alkali metal hydrogen sulfide is an exemplary example. The hydrogen sulfide compound may be the same as or different from the hydrogen sulfide compound used in the copper precipitating step S104. In the present embodiment, an aqueous solution of sodium hydrogen sulfide having a concentration of 200 g/L is used.

The addition of the aqueous solution of sodium hydrogen sulfide is performed, for example, until an oxidation/reduction potential (vs Ag/AgCl) is to be -400 mV or less. By adding the sodium hydrogen sulfide until the oxidation/reduction potential is to be - 400 mV or less, it is possible to precipitate almost the entire amount of cobalt and nickel contained in the eluate.

It is preferable that the pH of the leachate is maintained within a range of 2.0 to 5.0, preferably 2.0 to 3.5, from the start to the end of the addition of the hydrogen sulfide compound. In a case where the pH of the leachate is less than 2.0, a reaction between the sodium hydrogen sulfide and the sulfuric acid ($NaSH + H_2SO_4 \rightarrow H_2S + Na_2SO_4$) occurs, and

sulfidation of cobalt and nickel hardly proceeds because the sodium hydrogen sulfide is consumed. On the other hand, in a case where the pH of the leachate is more than 5.0, there is a risk that hydroxides of other metals are generated and thus the purity of the precipitate substance decreases. In addition, it is difficult to control the pH in the high range.

It is noted that the cobalt sulfide referred to herein may include cobalt sulfide compounds of various formulations, such as cobalt sulfide (11), cobalt disulfide ($CoS_2$), and nonacobalt octasulfide ($Co_9S_8$). Similarly, the nickel sulfide (NiS) may include nickel sulfide compounds of various formulations, such as nickel sulfide (II), nickel disulfide ($NiS_2$), trinickel tetrasulfide ($Ni_3S_4$), and trinickel disulfide ($Ni_3S_2$).

On the other hand, metal components (manganese, iron, aluminum, lithium, calcium, and the like) excluding cobalt and nickel remain in the liquid phase (residual liquid) after the addition of the hydrogen sulfide compound. Thereafter, the manganese, iron, aluminum, lithium, calcium, and the like, contained in the obtained liquid phase, can be separated and recovered by solvent extraction or the like by pH adjustment.

(Re-dissolution step S107)

Next, a re-dissolution liquid containing sulfuric acid is added to the precipitate substance obtained in the cobalt and nickel separating step S106, and a solid-liquid separation is performed to obtain a cobalt and nickel solution containing cobalt and nickel.

As the re-dissolution liquid, for example, a re-dissolution liquid obtained by mixing sulfuric acid and hydrogen peroxide as an oxidizing agent is used. As an example of the re-dissolution liquid, for example, a re-dissolution liquid obtained by mixing 20 ml of hydrogen peroxide water having a concentration of 30 wt% and 100 ml of a dilute sulfuric acid solution having a concentration of 1.5 mol/L is an exemplary example.

As a specific example of the re-dissolution step S107, for example, the precipitate substance is added to the re-dissolution liquid heated to 60°C or higher and immersed for 4 hours or more. At this time, it is preferable to further carry out stirring. Alternatively, air bubbling can also be carried out during the precipitate substance is immersed without adding the hydrogen peroxide water to the re-dissolution liquid.

At this time, in a case of setting the temperature of the treatment liquid to be 60°C or higher and setting the leaching time to be 1 hour or more, a dissolution rate of cobalt and nickel can be increased. Although there is no particular limitation, the dissolution rate cannot be expected to be further increased even in a case where the conditions are further increased, and thus the upper limit of the temperature of the treatment liquid is 90°C and the upper limit of the leaching time is 15 hours.

By the treatment of the precipitate substance using such a re-dissolution liquid, cobalt and nickel are dissolved in the re-dissolution liquid. In addition, impurities which are not dissolved in the re-dissolution liquid, elemental sulfur generated in the cobalt and nickel separating step S106, and the like remain as the solid phase. Thereafter, the solid-liquid separation is performed using a filtering medium or the like to obtain a cobalt and nickel solution in which the purity of cobalt and nickel is increased (purified).

The cobalt and nickel solution thus obtained rarely contains other components (copper, iron, aluminum, lithium, calcium, and the like) of the electrode material, other than cobalt and nickel, and thus the cobalt and nickel solution is suitable as a high-purity recovered raw material of cobalt and nickel.

It is also preferable to remove impurities other than the cobalt sulfide and the nickel sulfide by repulping the precipitate substance, as a pre-step of the re-dissolution step S107.

In the copper precipitating step S104, the procedure for removing aluminum before performing the solid-liquid separation has been described above. However, in a case where such a procedure is not carried out, the precipitate substance may contain an aluminum compound. In this case, the aluminum compound can be removed by repulping the precipitate substance.

(Solvent extracting step S108)

Next, an extractant solution is added to the cobalt and nickel solution obtained in the re-dissolution step S107 to obtain a cobalt extract and a nickel extract.

As the extractant solution, it is possible to use a mixed solution obtained by mixing a metal extractant and a diluent. For example, it is possible to use a mixed solution obtained by mixing 20 vol% of 2-ethylhexyl 2-ethylhexyl phosphonate (PC88A: manufactured by DAIHACHI CHEMICAL INDUSTRY Co., Ltd.) and 80 vol% of kerosene (diluent).

Using the extractant solution described above, a cobalt sulfate ($CoSO_4$) solution and a nickel sulfate ($NiSO_4$) solution are separated and recovered from the cobalt and nickel solution using a mixer-settler.

Cobalt and nickel can be recovered from the discarded LIB at a high yield by the above-described steps. For example, in a case where the amounts of cobalt and nickel in the electrode material taken out from the discarded LIB are each 100%, cobalt and nickel can be recovered at a high yield of 90% by mass or more by the method for separating cobalt and nickel according to the present embodiment.

(Embodiment 1-2)

FIG. 2 is a flowchart representing a method for separating cobalt and nickel according to an embodiment 1-2 of the present invention in a stepwise manner.

In the embodiment 1-2 to be described below, the same steps as in the embodiment 1-1 will not be described.

In the embodiment 1-2, a second treatment step S105B is performed between the copper precipitating step S104 and the cobalt and nickel separating step S106, instead of the first treatment step.

In the second treatment step S105B, a second filtering step S105B-1 and a second neutralizing step S105B-2 are performed in this order.

In the second filtering step S105B-1, the mixed solution containing the precipitate, obtained in the copper precipitating step S104, is subjected to a solid-liquid separation to separate a second eluate containing cobalt and nickel and a residue containing the copper sulfide (CuS). As a result, a solid phase containing the carbon residue generated in the leaching step S103 and the precipitate residue including the copper sulfide (CuS) generated in the copper precipitating step S104 is separated from the second eluate (liquid phase).

The solid phase separated in the second filtering step S105B-1 may be repulped (purified by adding water to the solid phase to resuspend the solid phase and then dehydrating the solid phase), or may be treated as a waste by washing the cake.

In the second neutralizing step S105B-2, the pH of the second eluate obtained in the second filtering step S105B-1 is adjusted by adding an alkali metal hydroxide; and thereby, a second neutralized solution is obtained.

In the copper precipitating step S104 as the pre-step, the pH of the leachate is maintained at 2.0 or less from the start to the end of the addition of the hydrogen sulfide compound; and therefore, there is a risk that the hydrogen sulfide compound and cobalt and nickel may hardly react with each other in this state in the subsequent cobalt and nickel separating step S106, but the pH of the eluate decreases as the hydrogen sulfide compound is added. After the pH adjustment, in a case where the pH at the start of the addition of the hydrogen sulfide compound is less than 3.0, the pH excessively decrease before the addition of the hydrogen sulfide compound is completed; and as a result, it is necessary to adjust the pH again. Therefore, it is more efficient to adjust the pH to be 3.0 or more in the pre-step of the cobalt and nickel separating step S106.

In addition, it takes a long time to adjust the pH in a case where the pH is adjusted to be a value exceeding 4.0, but the addition of the hydrogen sulfide compound immediately decreases the pH to be 4.0 or less, which is inefficient. Therefore, a range of 3.0 to 4.0 is desirable as the pH adjustment range.

In addition, in the second neutralizing step S105B-2, by using sodium hydroxide (NaOH) to adjust the pH of the second eluate obtained in the second filtering step S 1 05B-1 to be approximately 3.0 to 4.0, aluminum contained in the second eluate can be formed into aluminum hydroxide ($Al(OH)_3$) and precipitated.

In the second neutralizing step S105B-2, which is the pre-treatment for the pH adjustment of the cobalt and nickel separating step S106, as a pH adjustment liquid for adjusting the pH of the eluate to be 3.0 to 4.0, sodium hydroxide (NaOH) or potassium hydroxide (KOH) can be used as long as the pH is less than 3.0, and an acid, for example, sulfuric acid can also be used as long as the pH exceeds 4.0. In the present embodiment, the pH of the second eluate is adjusted to be in a range of 3.0 to 4.0, for example, 3.5, using a sodium hydroxide aqueous solution having a concentration of 25 wt%.

[Second embodiment]

A second embodiment is mainly different from the first embodiment in that the second embodiment includes a step of adding the antifoaming agent to either one of the electrode material, the sulfuric acid-added electrode material, the leaching paste, of the leachate.

In the following description, differences between the second embodiment and the first embodiment will be mainly described. The same configurations between these embodiments will be described with reference to the first embodiment.

(Embodiment 2-1)

FIG. 5 is a flowchart representing a method for separating cobalt and nickel, which includes a method for leaching an electrode material according to an embodiment 2-1 of the present invention, in a stepwise manner.

(Heat treatment step S201)

A heat treatment step S201 is the same as the heat treatment step S101 in the first embodiment.

(Crushing and sorting step S202)

A crushing and sorting step S202 is the same as the crushing and sorting step S102 in the first embodiment.

(Leaching step S203: method for leaching an electrode material)

Next, the electrode material separated in the crushing and sorting step S202 is reacted with sulfuric acid to obtain a leachate. As a treatment liquid, sulfuric acid ($H_2SO_4$) and an antifoaming agent containing an alcohol are used.

As a specific example of the leaching step S203, the electrode material is put into a sulfuric acid solution having a concentration of 1.1 mol/L or more and stirred. In addition, the mixture is heated such that the liquid temperature is in a range of 50°C or higher and 60°C or lower. In a case where the liquid temperature is increased to the above-described temperature range due to the reaction between the sulfuric acid and the electrode material, it may not be necessary to perform an external heating.

The sulfuric acid and the electrode material are stirred, and the antifoaming agent is added thereto. When the electrode material is dissolved by the sulfuric acid, gas is generated and the reaction solution foams, but by adding the antifoaming agent, the generated foam is rapidly reduced. A part of the electrode material floats up as a hard foam due to the gas generated by a reaction between a main component of the electrode material, for example, an electrode active material, and sulfuric acid, but by removing such a hard foam with the antifoaming agent, the reaction between the electrode material and sulfuric acid is prevented from being slow, and the reaction between the electrode material and sulfuric acid can proceed rapidly without adding an excess amount of sulfuric acid equal to or more than an equivalent amount of the reaction.

Such an antifoaming agent includes a saturated aliphatic alcohol having 8 or less carbon atoms. Since the alcohol has a hydrophilic group, the affinity between the hydrophobic electrode active material and the sulfuric acid containing water is increased, and the active materials contained in the electrode material are sufficiently leached, and the foaming is reduced.

As the saturated aliphatic alcohol having 8 or less carbon atoms, methanol, ethanol, propanol, butanol, pentanol, hexanol, a mixture of a plurality of these alcohols, or a denatured alcohol further containing a fragrance can be used. As the saturated aliphatic alcohol having 8 or less carbon atoms, contained in the antifoaming agent, butanol particularly is preferable among the above-described alcohols. In a case where butanol is used as the antifoaming agent, higher antifoaming properties can be obtained with a small amount of the butanol, as compared with other alcohols.

As the butanol used as the antifoaming agent, 1-butanol (n-butyl alcohol), 2-methyl-1-propanol (isobutyl alcohol), 2-butanol (sec-butyl alcohol), and 2-methyl-2-propanol (tert-butyl alcohol) are exemplary examples. Among these butanols, 1-butanol is preferably used.

According to the configuration in which the antifoaming agent is added after the sulfuric acid, the antifoaming agent can be added little by little while confirming disappearance of the foams, and the addition of an excessive amount of the antifoaming agent can be avoided.

In addition, in the leaching step S203, hydrogen peroxide can be further added to the electrode material, in addition to the sulfuric acid and the antifoaming agent. Co and Ni contained in the electrode material also include a trivalent or tetravalent state which is hardly dissolved in the sulfuric acid; and therefore, by adding the hydrogen peroxide as a reducing agent, Co and Ni can be reduced to a divalent state which is more easily dissolved in the sulfuric acid. The hydrogen peroxide may be added in a state of hydrogen peroxide water having a concentration of 30% to 35% by mass.

In a case where the hydrogen peroxide is added in the leaching step S203, in order to exhibit reducing properties of the hydrogen peroxide, the liquid temperature is set to be in a range of 50°C or higher and 60°C or lower. In the leaching step S203, when the sulfuric acid is added to the electrode material, the kneaded material is usually heated by positive reaction heat to be higher than room temperature, so that, depending on the conditions, it may not be necessary to perform an external heating operation.

Although foams are likely to be generated by the addition of hydrogen peroxide, the addition of antifoaming agent can suppress the foaming due to the addition of hydrogen peroxide.

In addition, the leaching step S203 can be performed through a two-stage process including a kneading step (the kneading step S103-1 in the first embodiment) of kneading the electrode material with a small amount of sulfuric acid (treatment liquid) to form a leaching paste, and a diluting step (the diluting step S103-2 in the first embodiment) of diluting the obtained leaching paste with water to form a leachate.

In a case where the leaching step S203 is performed through such a two-stage process, the antifoaming agent may be added to at least one of the kneading step and the diluting step. For example, in the kneading step, in a case where a small amount of a sulfuric acid solution having a concentration of approximately 45% to 47% by mass and the electrode material are kneaded to be pasty, the antifoaming agent is added to reduce the foaming of the kneaded material due to the gas generated when the electrode material is dissolved by the sulfuric acid, and thus the leaching paste can be easily produced.

By the above-described leaching step S203, the leachate in which the active materials of the electrode material are leached can be efficiently produced in a short time without using an excessive amount of sulfuric acid. Since carbon contained in the electrode material is not leached, the carbon remains in a solid state as carbon residue.

As described above, with the method for leaching an electrode material according to the present embodiment, in the leaching step S203, the electrode material is reacted with sulfuric acid, and then the antifoaming agent is added. Thereby, the foams generated in the reaction can be rapidly removed, and the reaction between the electrode material and the sulfuric acid can be prevented from being slow, and the reaction between the electrode material and the sulfuric acid can proceed rapidly without adding an excess amount of sulfuric acid equal to or more than an equivalent amount of the reaction.

(Copper precipitating step S204)

A copper precipitating step S204 is the same as the copper precipitating step S104 in the first embodiment.

(First treatment step S205A)

A first treatment step S205A is the same as the first treatment step S105A in the first embodiment.

(Cobalt and nickel separating step S206)

A cobalt and nickel separating step S206 is the same as the cobalt and nickel separating step S106 in the first embodiment.

The alcohol contained in the antifoaming agent used in the leaching step S203 migrates to the liquid phase (residual liquid) after the addition of hydrogen sulfide compound.

(Re-dissolution step S207)

A re-dissolution step S207 is the same as the re-dissolution step S107 in the first embodiment.

(Solvent extracting step S208)

A solvent extracting step S208 is the same as the solvent extracting step S108 in the first embodiment.

Cobalt and nickel can be recovered from the discarded LIB at a high yield by the above-described steps. For example, in a case where the amounts of cobalt and nickel in the electrode material taken out from the discarded LIB are each 100%, each of cobalt and nickel can be recovered at a high yield of 95% or more by the method for separating cobalt and nickel according to the present embodiment.

(Embodiment 2-2)

FIG. 5 is a flowchart representing a method for separating cobalt and nickel according to an embodiment 2-2 of the present invention in a stepwise manner.

In the embodiment 2-2 to be described below, the same steps as in the embodiment 2-1 will not be described.

In the embodiment 2-2, a second treatment step S205B is performed between the copper precipitating step S204 and the cobalt and nickel separating step S206, instead of the first treatment step.

In the second treatment step S205B, a second filtering step S205B-1 and a second neutralizing step S205B-2 are performed in this order.

The second treatment step S205B is the same as the second treatment step S105B in the first embodiment. The second filtering step S205B-1 is the same as the second filtering step S105B-1 in the first embodiment. The second neutralizing step S205B-2 is the same as the second neutralizing step S105B-2 in the first embodiment.

In the second neutralizing step S205B-2, which is the pre-treatment for the pH adjustment of the cobalt and nickel separating step S206, as a pH adjustment liquid for adjusting the pH of the eluate having a pH of approximately 1.0 to be in a range of 3.0 to 4.0, sodium hydroxide (NaOH) or potassium hydroxide (KOH) can be used, and an acid, for example, sulfuric acid can also be used as long as the pH exceeds 4.0. In the present embodiment, the pH of the second eluate is adjusted to be in a range of 3.0 to 4.0, for example, 3.5, using a sodium hydroxide aqueous solution having a concentration of 25 wt%.

[Third embodiment]

A third embodiment is mainly different from the first embodiment in that the leaching step S303 includes an iron powder adding step S303-2 and an ORP measuring step S303-3, and the iron powder adding step S303-2 and the ORP measuring step S303-3 are repeated until a stable ORP value is equal to or less than a predetermined value.
In the following description, differences between the third embodiment and the first embodiment will be mainly described. The same configurations between these embodiments will be described with reference to the first embodiment.

(Embodiment 3-1)

FIG. 6 is a flowchart representing a method for separating cobalt and nickel, which includes a leaching method according to an embodiment 3-1 of the present invention, in a stepwise manner.

(Heat treatment step S301)

A heat treatment step S301 is the same as the heat treatment step S101 in the first embodiment.

(Crushing and sorting step S302)

A crushing and sorting step S302 is the same as the crushing and sorting step S102 in the first embodiment.

(Leaching step S303: leaching method)

Next, in a leaching step S303 constituting the leaching method according to the present embodiment, the electrode material separated in the crushing and sorting step S302 is subjected to acid leaching with a treatment liquid containing sulfuric acid to obtain a leachate.
The leaching step S303 is a step including a sulfuric acid adding step S303-1 of adding sulfuric acid to the electrode material, an iron powder adding step S303-2 of adding iron powder to the leachate, and an ORP measuring step S303-3 of measuring an oxidation reduction potential (ORP) after the addition of iron powder to specify a stable oxidation reduction potential which is an oxidation reduction potential at a point in time when an increase in oxidation reduction potential is not observed, in which the iron powder adding step S303-2 and the ORP measuring step S303-3 are repeated until the stable oxidation reduction potential is equal to or less than a predetermined value.
First, in the sulfuric acid adding step S303-1, a sulfuric acid solution having a concentration of approximately 45% to 47% by mass is added to the electrode material containing the electrode active material separated in the crushing and sorting step S302, and the mixture is stirred. At this time, the pH of the solution obtained by adding the sulfuric acid to the electrode material is adjusted to be 1.5 or more and 2.0 or less. In addition, the solution is heated such that a liquid temperature of the solution is in a range of 50°C or higher and 70°C or lower. In a case where the liquid temperature is within the above-described range due to positive reaction heat between the electrode material and the sulfuric acid, it may not be necessary to perform an external heating.
The electrode material also contains metals which are hardly dissolved in the sulfuric acid, such as trivalent or tetravalent cobalt or nickel, and in the sulfuric acid adding step S303-1, these metals are not leached with the sulfuric acid.
Next, in the iron powder adding step S303-2, the iron powder is added, as a reducing agent, to the solution obtained by adding the sulfuric acid to the electrode material, and the mixture is stirred. As the iron powder to be added, for example, it is preferable to use iron powder having an average particle size value (D50) of 54 μm or more and 1 mm or less. By setting the average particle size value (D50) to be 54 μm or more, the risk in handling due to fine dust can be reduced. In addition, by setting the average particle size value (D50) to be 1 mm or less, reactivity as the reducing agent can be increased in an appropriate range.
In a case where the iron powder is added to the solution obtained by adding the sulfuric acid to the electrode material in the iron powder adding step S303-2, copper slightly dissolved in the sulfuric acid adding step S303-1 of an electrode active material having a high valence serves as a starting point, and in a case of, for example, the dissolved copper and the iron powder, the added iron powder is dissolved by a reaction of the following formula (2).

$$CuSO_4 + Fe \rightarrow Cu + FeSO_4 \ldots \qquad (2)$$

$Fe^{2+}$ dissolved by the above-described formula (2) or the like undergoes an oxidation reduction reaction with the electrode active material having a high valence (for example, $LiNi_{0.6}Mn_{0.2}Co_{0.2}O_2$) to cause a reaction of the following formula (3).

$$10FeSO_4 + 20H_2SO_4 + 10LiNi_{0.6}Mn_{0.2}Co_{0.2}O_2 \rightarrow 5Fe_2(SO_4)_3 + 5Li_2SO_4 + 6NiSO_4 + 2MnSO_4 + 2CoSO_4 + 20H_2O \ ... \quad (3)$$

In such a reaction of the formula (3), Mn, Co, and Ni ions having a 3 or higher valence in the electrode active material become divalent ions by Fe, and are dissolved in the sulfuric acid.

$Fe_2(SO_4)_3$ (ferric sulfate) which is a trivalent iron compound generated by the reaction of the formula (2) reacts with the added iron powder or copper in the electrode material to form a divalent iron compound by a reaction of the following formula (4) or formula (5).

$$Fe_2(SO_4)_3 + Fe \rightarrow 3FeSO_4 \ ... \quad (4)$$

$$Fe_2(SO_4)_3 + Cu \rightarrow 2FeSO_4 + CuSO_4 \ ... \quad (5)$$

In the ORP measuring step S303-3, after the iron powder is added to the solution obtained by adding the sulfuric acid to the electrode material in the iron powder adding step S303-2 and stirred, an oxidation reduction potential (ORP) of the stirred solution is continuously measured. The ORP is an indicator of oxidizability of reducibility of a solution, and can be measured using a pH meter having an mV measurement function, a noble metal electrode (platinum electrode or gold electrode), and a reference electrode.

The ORP immediately after the addition of iron powder is greatly and temporarily decreased, but gradually increases and stabilizes with the passage of time. The ORP at this time is defined as the stable oxidation reduction potential. In a case where the stable oxidation reduction potential is a predetermined value, that is, 400 mV or more (at a liquid temperature of 50°C) in the present embodiment, the iron (iron powder) which reacts with the ferric sulfate in the formula (4) described above is insufficient, and the reaction of the formula (3), that is, the state in which all of the Mn, Co, and Ni ions having a high valence does not become divalent ions is obtained.

Therefore, in the ORP measurement step S303-3, in a case where the stable oxidation reduction potential is 400 mV or more, the iron powder adding step S303-2 and the ORP measuring step S303-3 are repeated until the stable oxidation reduction potential is 400 mV or less.

In a case where the stable oxidation reduction potential is 400 mV or less, all of the electrode active materials having a high valence, for example, trivalent or higher valent Mn, Co, and Ni ions are converted into the divalent ions and dissolved in the sulfuric acid (the formula (3)), and the dissolved iron is replaced with the divalent ions (the formula (4) and the formula (5)). In this way, the state in which the stable oxidation reduction potential is 400 mV or less in the ORP measuring step S303-3 is determined as an end point of reaction (a point in time at which the necessary amount of the iron powder has been added to the reaction) in the leaching step S303.

It is preferable that the liquid temperature of the solution in the iron powder adding step S303-2 and the ORP measuring step S303-3 is 40°C or higher and 100°C or lower. As the liquid temperature is higher, the time required to reach the stable oxidation reduction potential is shorter. In a case where the liquid temperature is 40°C or higher, the ORP measuring step S303-3 can be efficiently performed. On the other hand, even in a case where the liquid temperature is excessively increased, the effect of shortening the time until the end point of reaction is not improved. Therefore, it is preferable that the liquid temperature is 100°C or lower. The liquid temperature is more preferably 50°C or higher and 70°C or lower, and still more preferably 50°C or higher and 60°C or lower.

In the sulfuric acid adding step S303-1 of the leaching step S303, an antifoaming agent containing a saturated aliphatic alcohol having 8 or less carbon atoms can also be added together with the sulfuric acid. When the electrode material is dissolved in the sulfuric acid, gas is generated and the solution foams, but by adding the antifoaming agent containing, for example, 1-butanol as the alcohol, the generated foams are rapidly reduced. As a result, a part of the electrode material floats up as a hard foam due to the gas generated by a reaction between a main component of the electrode material, for example, an electrode active material, and sulfuric acid, but by removing such a hard foam with the antifoaming agent, the reaction between the electrode material and sulfuric acid is prevented from being slow, and the reaction between the electrode material and sulfuric acid can proceed rapidly without adding an excess amount of sulfuric acid equal to or more than an equivalent amount of the reaction.

In addition, the sulfuric acid adding step S303-1 of the leaching step S303 can be performed through a two-stage process including a kneading step (the kneading step S103-1 in the first embodiment) of kneading the electrode material with a small amount of sulfuric acid (treatment liquid) to form a leaching paste, and a diluting step (the diluting step S103-2 in the first embodiment) of diluting the obtained leaching paste with water to form a leachate.

In the leaching step S303, by kneading the mixture in a paste state, contact between the electrode material and the sulfuric acid is facilitated as compared with stirring in a liquid state in the related art. In addition, air bubbles generated by the leaching are crushed by the kneading, and an affinity between the electrode material and the sulfuric acid can be increased. As a result, it is possible to efficiently leach the electrode material with acid in a short time.

By the above-described leaching step S303, it is easy to determine the end point of reaction without using an excessive amount of iron powder, and the leachate in which the active materials of the electrode material are leached can be efficiently produced in a short time. Since carbon contained in the electrode material is not leached, the carbon remains in a solid state as carbon residue.

As described above, in the leaching method according to the present embodiment, by using the iron powder having a low cost as the reducing agent in the leaching step S303, it is possible to convert the electrode active material having a high valence, contained in the electrode material, into divalent ions and it is possible to leach the divalent ions with sulfuric acid at a low cost, as compared with a case in which sodium sulfate or sodium hydrogen sulfate is used as the reducing agent in the related art.

In addition, in contrast to the case of sodium sulfate or sodium hydrogen sulfate in the related art, toxic sulfur dioxide gas is not generated by reacting with the sulfuric acid, and the leaching treatment can be performed with simple equipment.

Then, by repeating the iron powder adding step S303-2 and the ORP measuring step S303-3 until the stable oxidation reduction potential is equal to or less than a predetermined value, for example, 400 mV or less, the end point of reaction at which the electrode active material having a high valence is converted into divalent ions and dissolved in the sulfuric acid can be determined, and the leaching step S303 can be performed at a low cost without adding an excess amount of the iron powder equal to or more than an equivalent amount of the reaction. In addition, since an excessive amount of the iron powder equal to or more than an equivalent amount of the reaction is not added, iron can be easily separated in a subsequent step.

(Copper precipitating step S304)

A copper precipitating step S304 is the same as the copper precipitating step S104 in the first embodiment.

(First treatment step S305A)

A first treatment step S305A is the same as the first treatment step S105A in the first embodiment.

(Cobalt and nickel separating step S306)

A cobalt and nickel separating step S306 is the same as the cobalt and nickel separating step S106 in the first embodiment.

(Re-dissolution step S307)

The treatment of the precipitate substance using the re-dissolution liquid dissolves cobalt and nickel in the re-dissolution liquid. In addition, impurities which are not dissolved in the re-dissolution liquid, elemental sulfur generated in the cobalt and nickel separating step S306, and the like remain as the solid phase. Thereafter, the solid-liquid separation is performed using a filtering medium or the like to obtain a cobalt and nickel solution containing cobalt and nickel.

The cobalt and nickel solution thus obtained contains, as components of the electrode material other than cobalt and nickel, iron added in the iron powder adding step S303-2 in the leaching step S303, and a small amount of manganese.

Unless otherwise specified, a re-dissolution step S307 is the same as the re-dissolution step S107 in the first embodiment.

(Iron separating step S308)

In an iron separating step S308, the pH of the cobalt and nickel solution obtained in the re-dissolution step S307 is adjusted to be in a range of 3 or more and 5 or less. As necessary, an alkali metal hydroxide or the like is used for the adjustment, and sodium hydroxide is used in the present embodiment. Then, a hypochlorite compound, for example, sodium hypochlorite, is added to the cobalt and nickel solution after the pH adjustment, so that the divalent iron contained in the cobalt and nickel solution reacts with the sodium hypochlorite, and precipitates as a water-insoluble trivalent iron hydroxide ($FeOH_3$). In addition, the manganese contained in the cobalt and nickel solution precipitates as water-insoluble manganese dioxide ($MnO_2$). Thereafter, the precipitate substance is filtered to obtain a cobalt and nickel purified solution.

As described above, in the iron separating step S308, the iron added in the leaching step S303 and a small amount of manganese can be separated from the cobalt and nickel solution obtained in the re-dissolution step S307.

In the iron separating step S308, when the hypochlorite compound is added to the re-dissolution liquid, an addition end point of the hypochlorite compound is determined by the following expression 1 which shows a relationship between an oxidation reduction potential (ORP) and a pH.

$$ORP = -153.18 \times pH + 1577.2 \pm 30 \, (mV) \ldots (1)$$

By adding the hypochlorite compound such that the ORP of the re-dissolution liquid is within the range of the expression 1, iron and manganese are precipitated completely, and thus these can be appropriately removed.

The iron separating step S308 is provided as a subsequent step of the re-dissolution step S307 in the present embodiment, but in addition to this, for example, the iron separating step S308 can also be performed as a subsequent step of the copper precipitating step S304.

However, in this case, in order to adjust the pH to be 3 or more and 5 or less while removing a large amount of iron and manganese contained in the solution, a large amount of sodium hypochlorite or sodium hydroxide is required.

(Solvent extracting step S309)

A solvent extracting step S309 is the same as the solvent extracting step S108 in the first embodiment.

Cobalt and nickel can be recovered from the discarded LIB at a high yield by the above-described steps. For example, in a case where the amounts of cobalt and nickel in the electrode material taken out from the discarded LIB are each 100% by mass, cobalt and nickel can be recovered at a high yield of 90% by mass or more by the method for separating cobalt and nickel according to the present embodiment.

(Embodiment 3-2)

FIG. 7 is a flowchart representing a method for separating cobalt and nickel according to an embodiment 3-2 of the present invention in a stepwise manner.

In the embodiment 3-2 to be described below, the same steps as in the embodiment 3-1 will not be described.

In the embodiment 3-2, a second treatment step S305B is performed between the copper precipitating step S304 and the cobalt and nickel separating step S306, instead of the first treatment step.

In the second treatment step S305B, a second filtering step S305B-1 and a second neutralizing step S305B-2 are performed in this order.

The second treatment step S305B is the same as the second treatment step S105B in the first embodiment. The second filtering step S305B-1 is the same as the second filtering step S105B-1 in the first embodiment. The second neutralizing step S305B-2 is the same as the second neutralizing step S105B-2 in the first embodiment.

In the second neutralizing step S305B-2, which is the pre-treatment for the pH adjustment of the cobalt and nickel separating step S306, as a pH adjustment liquid for adjusting the pH of the eluate having a pH of approximately 1.0 to be in a range of 3.0 to 4.0, sodium hydroxide (NaOH) of potassium hydroxide (KOH) can be used, and an acid, for example, sulfuric acid can also be used as long as the pH exceeds 4.0. In the present embodiment, the pH of the second eluate is adjusted to be in a range of 3.0 to 4.0, for example, 3.5, using a sodium hydroxide aqueous solution having a concentration of 25 wt%.

[Fourth embodiment]

The fourth embodiment is different from the first embodiment in that a washing step of recovering an alkaline washing discharge liquid after washing of the electrode material with water is provided, and the washing discharge liquid is reused in the first neutralizing step (S105A-1, S205A-1, or S305A-1) or the second neutralizing step (S105B-2, S205B-2, or S305B-2).

In the following description, differences between the fourth embodiment and the first embodiment will be mainly described. The same configurations between these embodiments will be described with reference to the first embodiment.

(Embodiment 4-1)

FIG. 9 is a flowchart representing a method for recycling an electrode material of a lithium ion secondary battery, which includes a method for separating cobalt and nickel according to an embodiment 4-1 of the present invention, in a stepwise manner.

(Heat treatment step S401)

A heat treatment step S401 is the same as the heat treatment step S101 in the first embodiment.

(Crushing and sorting step S402)

A crushing and sorting step S402 is the same as the crushing and sorting step S102 in the first embodiment.

(Washing step S403)

Next, the powder-like electrode material containing the electrode active material, which has been separated in the crushing and sorting step S402, is washed with water. As the water, for example, distilled water can be used. In the washing step S403, for example, the electrode material may be put into water having a liquid temperature of 0°C of higher and 100°C of lower, and stirred for 0.33 hours or longer and 6 hours or shorter.

Thereafter, for example, the solid-liquid separation is performed using a filter medium to recover the electrode material after the washing and the washing discharge liquid after the washing of the electrode material. The washing discharge liquid thus obtained has a weakly alkaline pH of approximately 9 to 10 because the lithium compound (for example, lithium carbonate) contained in the electrode material is dissolved in water in the washing step S403. In addition, the electrode material after the washing may be supplied to the subsequent step, that is, the leaching step S404, in a wet state without particularly carrying out drying.

As in the present embodiment, by performing the washing of the electrode material separated in the crushing and sorting step S402 with water in the washing step S403, components of the electrode material which are dissolved in water and become alkaline, for example, a part of the lithium compound is transferred to the washing discharge liquid. As a result, when the electrode material is leached with acid in the subsequent leaching step S404, the used amount of sulfuric acid can be reduced, and the treatment cost related to the separation of cobalt and nickel can be reduced. For example, in a case where the washing step S403 is performed, the amount of sulfuric acid used in the leaching step can be reduced by approximately 10% to 20% as compared with a case in which the washing step S403 is not performed.

(Leaching step S404)

Next, the electrode material washed in the washing step S403 is immersed in a treatment liquid to obtain a leachate. As the treatment liquid, a mixture of sulfuric acid ($H_2SO_4$) and hydrogen peroxide ($H_2O_2$) may be used. Co and Ni contained in the discarded LIB include those in trivalent and tetravalent states, which are hardly dissolved in sulfuric acid, and thus in a case of using hydrogen peroxide as a reducing agent, Co and Ni can be reduced to divalent Co and Ni, which are more easily dissolved in sulfuric acid.

As an example of the treatment liquid, for example, a treatment liquid obtained by mixing 5 ml or more of hydrogen peroxide water having a concentration of 30 wt% and 100 ml of a dilute sulfuric acid solution having a concentration of 2 mol/L or more is an exemplary example. By setting the concentration of the dilute sulfuric acid to be 2 mol/L or more and setting the addition amount of the hydrogen peroxide water to be 5 ml or more, the leaching rate of cobalt and nickel can be increased. Although there is no particular limitation, the leaching rate cannot be expected to be further increased even in a case where the conditions are further increased, and thus the upper limit of the concentration of the sulfuric acid solution is 18 mol/L and the upper limit of the addition amount of hydrogen peroxide water is 30 ml.

As a specific example of the leaching step S404, for example, the electrode material in a wet state, after being washed with water in the washing step S403, is added to the treatment liquid heated to 60°C or higher, and is immersed for 4 hours or longer. At this time, it is preferable to further carry out stirring.

In a case of setting the temperature of the treatment liquid to be 60°C or higher and setting the leaching (immersing) time to be 4 hours or more, the leaching rate of cobalt and nickel can be increased. Although there is no particular limitation, the leaching rate cannot be expected to be further increased even in a case where the conditions are further increased, and thus the upper limit of the temperature of the treatment liquid is 90°C and the upper limit of the leaching time is 15 hours.

By such a leaching step S404, in the electrode material, metal components derived from the cathode active material (cobalt, nickel, manganese, copper, iron, aluminum, lithium, calcium, and the like) are dissolved in the treatment liquid, and carbon derived from the anode active material is not dissolved and remains as carbon residue.

In the leaching step S404, an antifoaming agent containing a saturated aliphatic alcohol having 8 or less carbon atoms can also be added together with the sulfuric acid and the hydrogen peroxide. In a case where the electrode material is dissolved in the sulfuric acid or in a case where the hydrogen peroxide acts as a reducing agent, gas is generated and the solution foams, but by adding the antifoaming agent containing, for example, 1-butanol as the alcohol, the generated foams are rapidly reduced. As a result, it is possible to prevent a part of the electrode material from floating up as a hard foam. Therefore, it is possible to prevent the reaction between the electrode material and the sulfuric acid from being slowed down by the foaming and it is possible to proceed with the reaction between the electrode material and the sulfuric acid rapidly without adding an excess amount of sulfuric acid equal to or more than an equivalent amount of the reaction.

In addition, the leaching step S404 can also be performed through a two-stage process including a kneading step of kneading the electrode material with a small amount of sulfuric acid (treatment liquid) to form a leaching paste, and a diluting step of diluting the obtained leaching paste with water to form a leachate. At this time, in a case where the electrode material after the washing in the washing step S403, which is the pre-step, is supplied to the kneading step in a wet state without being dried, it is easy to form the leaching paste by mixing with the sulfuric acid.

In the leaching step S404, by kneading the mixture in a paste state, contact between the electrode material and the sulfuric acid is facilitated as compared with stirring in a liquid state in the related art. In addition, air bubbles generated by the leaching are crushed by the kneading, and the electrode material and the sulfuric acid are to be compatible with each other. As a result, the electrode material can be efficiently leached with acid in a short time.

The leaching step S404 may be performed according to the description of the leaching step S103, S203, or S303 in the first to third embodiments.

(Copper precipitating step S405)

A copper precipitating step S405 is the same as the copper precipitating step S104 in the first embodiment.

(First treatment step S406A)

Next, as a first treatment step S406A, a first neutralizing step S406A-1 and a first filtering step S406A-2 are performed in this order.

In the first neutralizing step S406A-1, the pH of the mixed solution containing the precipitate obtained in the copper precipitating step S405 is adjusted by adding the washing discharge liquid recovered in the washing step S403 and an alkali metal hydroxide; and thereby, a first neutralized solution is obtained.

In the first neutralizing step S406A-1, which is the pre-treatment for the pH adjustment of the cobalt and nickel separating step S407, as a pH adjustment liquid for adjusting the pH of the eluate having a pH of approximately 1.0 to be in a range of 3.0 to 4.0, the washing discharge liquid having a pH of approximately 9 to 10, which is recovered in the washing step S403, is reused. In a case where the pH of the eluate cannot be adjusted to be 3.0 to 4.0 only with the washing discharge liquid, an alkali metal hydroxide, for example, sodium hydroxide (NaOH) or potassium hydroxide (KOH) can also be used as long as the pH is less than 3.0, and an acid, for example, sulfuric acid can also be used as long as the pH exceeds 4.0. In the present embodiment, the pH of the eluate is adjusted to be in a range of 3.0 to 4.0, for example, 3.5, using the washing discharge liquid having a pH of 10, which is recovered in the washing step S403, and a sodium hydroxide aqueous solution having a concentration of 25 wt%.

In this way, in the first neutralizing step S406A-1, by reusing the washing discharge liquid recovered in the washing step S403, a used amount of expensive sodium hydroxide can be reduced, and the treatment cost related to the separation of cobalt and nickel can be reduced.

Unless otherwise specified, a first treatment step S406A is the same as the first treatment step S105A in the first embodiment.

(Cobalt and nickel separating step S407)

Next, a hydrogen sulfide compound is added to the first eluate obtained in the first treatment step S406A, and the mixture is stirred and subjected to a solid-liquid separation to obtain a precipitate substance (solid phase) containing cobalt sulfide and nickel sulfide and a residual liquid (liquid phase) containing lithium.

Unless otherwise specified, the cobalt and nickel separating step S407 is the same as the cobalt and nickel separating step S106 in the first embodiment.

As the hydrogen sulfide compound for sulfiding cobalt and nickel, in the present embodiment, an aqueous solution of sodium hydrogen sulfide having a concentration of 250 g/L is used.

(Re-dissolution step S408)

As a re-dissolution liquid used in a re-dissolution step S408, for example, a re-dissolution liquid obtained by mixing sulfuric acid and hydrogen peroxide as an oxidizing agent is used.

It is also preferable to remove impurities other than the cobalt sulfide and the nickel sulfide by repulping the precipitate substance, as a pre-step of the re-dissolution step S408.

In addition, in the first neutralizing step S406A-1, the procedure for precipitating and removing the dissolved aluminum as aluminum hydroxide has been described above. However, in a case where such a procedure is not carried out, the precipitate substance obtained in the cobalt and nickel separating step S407 may contain an aluminum compound. In this case, the aluminum compound can be removed by repulping the precipitate substance.

Unless otherwise specified, a re-dissolution step S408 is the same as the re-dissolution step S107 in the first embodiment.

(Solvent extracting step S409)

A solvent extracting step S409 is the same as the solvent extracting step S108 in the first embodiment.

Cobalt and nickel can be recovered from the discarded LIB at a high yield by the present step. For example, in a case where the amounts of cobalt and nickel in the electrode material taken out from the discarded LIB are each 100%, cobalt and nickel can be recovered at a high yield of 90% or more by the method for separating cobalt and nickel according to the present embodiment.

(Embodiment 4-2)

Unless otherwise specified, a second treatment step S406B is the same as the second treatment step S105B in the first embodiment. The second filtering step S406B-1 is the same as the second filtering step S105B-1 in the first embodiment. The second neutralizing step S406B-2 is the same as the second neutralizing step S105B-2 in the first embodiment.

In the second neutralizing step S406B-2, the pH of the second eluate obtained in the second filtering step S406B-1 is adjusted by adding the washing discharge liquid recovered in the washing step S403 and an alkali metal hydroxide; and thereby, a second neutralized solution is obtained.

In the second neutralizing step S406B-2, which is the pre-treatment for the pH adjustment of the cobalt and nickel separating step S407, as a pH adjustment liquid for adjusting the pH of the eluate having a pH of approximately 1.0 to be in a range of 3.0 to 4.0, the washing discharge liquid having a pH of approximately 9 to 10, which is recovered in the washing step S403, is reused. In a case where the pH of the second eluate cannot be adjusted to be 3.0 to 4.0 only with the washing discharge liquid, an alkali metal hydroxide, for example, sodium hydroxide (NaOH) or potassium hydroxide (KOH) can also be used as long as the pH is less than 3.0, and an acid, for example, sulfuric acid can also be used as long as the pH exceeds 4.0. In the present embodiment, the pH of the second eluate is adjusted to be in a range of 3.0 to 4.0, for example, 3.5, using the washing discharge liquid having a pH of 10, which is recovered in the washing step S403, and a sodium hydroxide aqueous solution having a concentration of 25 wt%.

In this way, in the second neutralizing step S406B-2, by reusing the washing discharge liquid recovered in the washing step S403, a used amount of expensive sodium hydroxide can be reduced, and the treatment cost related to the separation of cobalt and nickel can be reduced.

Although a description was given of one embodiment of the present invention above, this embodiment is presented as an example and is not intended to limit the scope of the invention. It is possible to implement the embodiment in various other forms and to make various omissions, substitutions, and modifications in a range not departing from the features of the invention. The embodiment and variations thereof are included within the invention described the scope of the claims and equivalents thereof as well as being included within the scope and the features of the invention.

The first to fourth embodiments can also be combined in any manner.

The electrode material after the heat treatment step and the crushing and sorting step may be separately obtained, and the leaching step may be performed using this electrode material.

The electrode material after the heat treatment step may be separately obtained, and the crushing and sorting step and the leaching step may be performed using this electrode material.

The electrode material after the crushing and sorting step may be separately obtained, and the heat treatment step and the leaching step may be performed using this electrode material.

The electrode material after the heat treatment step and the crushing step may be separately obtained, and the sorting step and the leaching step may be performed using this electrode material.

[Example 1]

The effects of the method for separating cobalt and nickel, including the method for leaching an electrode material according to the embodiment of the present invention, were examined.

(Example 1-1)

85 mL of a sulfuric acid solution having a concentration of 47 wt% was added to 72.5 g of an electrode material (electrode active material) taken out from a discarded LIB, and the mixture was kneaded for 15 minutes by a rubber spatula to obtain a leaching paste (kneading step). Table 1 shows a leaching test result of the electrode material (electrode active material) after the kneading step. "Time (min)" in Table 1 indicates an elapsed time from the start of the addition of hydrogen peroxide. In addition, in the table, "pH", "Temperature", and "Oxidation reduction potential (ORP)" indicate values at each point in time; "Cumulative addition amount" (sulfuric acid, hydrogen peroxide, NaSH, and NaOH) indicates the total addition amount at each point in time; and "Concentration" indicates a metal concentration at each point in time.

Thereafter, 415 mL of distilled water was added to the obtained leaching paste for dilution (diluting step), and a liquid temperature was adjusted to be around 50°C while stirring (Experimental Example 1A1).

With confirming a change over time from the start of addition of a hydrogen peroxide solution having a concentration of 30 wt%, 25 mL of the hydrogen peroxide solution having a concentration of 30 wt% was added to the reaction solution of Experimental Example 1A1 over 75 minutes while appropriately adding a sulfuric acid solution having a concentration of 47 wt% to maintain the pH at 2.0 or less (Experimental Example 1A2).

A sodium hydrosulfide solution having a concentration of 200 g/L was added to the reaction solution of Experimental Example 1A2 until the ORP was 0 mV or less (copper separating step, Experimental Example 1A3).

A sodium hydroxide solution having a concentration of 25 wt% was added to the leachate of Experimental Example 1A3 for neutralization, and the pH was stabilized to 3.0 to 4.0 (neutralizing step, Experimental Example 1A4).

The reaction solution of Experimental Example 1A4 was subjected to a solid-liquid separation by filtration to separate carbon of the anode material of the discarded LIB, which was insoluble in the sulfuric acid leaching, and the produced residue (copper sulfide); and thereby, 462 mL of a leachate was obtained. The composition of 36.96 g of the residue (copper sulfide) is shown in Table 2.

[Table 1]

| Experimental Example | Time (min) | pH | Temperature (°C) | ORP (mV) | Cumulative addition amount (mL) | | | | Concentration (g/L) | | | | | |
|---|---|---|---|---|---|---|---|---|---|---|---|---|---|---|
| | | | | | $H_2SO_4$ | $H_2O_2$ | NaSH | NaOH | Ni | Co | Mn | Li | Al | Cu |
| 1A1 | 0 | 2.07 | 50.1 | 339 | 85 | 0 | 0 | 0 | 13.51 | 15.14 | 12.82 | 5.70 | 2.62 | 0.31 |
| 1A2 | 75 | 1.82 | 49.7 | 522 | 100 | 25 | 0 | 0 | 13.28 | 14.91 | 12.53 | 5.91 | 2.80 | 2.36 |
| 1A3 | 95 | 1.79 | 44.5 | -2 | 100 | 25 | 14.9 | 0 | 12.78 | 14.16 | 12.25 | 5.75 | 2.74 | 0.00 |
| 1A4 | 123 | 3.43 | 39.4 | 235 | 100 | 25 | 14.9 | 38 | 12.20 | 13.49 | 11.61 | 5.14 | 1.25 | 0.00 |

[Table 2]

| Ni wt% | Co wt% | Mn wt% | Al wt% | Cu wt% |
|---|---|---|---|---|
| 0.72 | 0.95 | 0.21 | 4.93 | 3.90 |

From the results of Experimental Example 1, in a case where the amounts of cobalt and nickel in the electrode material taken out from the discarded LIB were 100%, the leaching rate was calculated to be 95% for the cobalt and 95% for the nickel, so that it was found that cobalt and nickel were sufficiently leached from the active material, and the time and the amount of sulfuric acid required for the leaching could be reduced as compared with the method in the related art.

Next, after confirming that black precipitate substance (cobalt sulfide and nickel sulfide) was sufficiently generated, a solid-liquid separation was performed to recover the precipitate substance (cobalt and nickel separating step). On the other hand, impurities such as manganese, aluminum, iron, lithium, and calcium remained in the residual liquid, and thus were disposed of as a metal-containing waste liquid.

The precipitate substance was added to a re-dissolution liquid containing 100 mL of a sulfuric acid solution having a concentration of 1.5 mol/L and 20 mL of hydrogen peroxide water having a concentration of 30 wt%, and the mixture was heated to a liquid temperature of 60°C and stirred for 1 hour (re-dissolution step). Thereafter, the mixture was cooled to room temperature, and an undissolved fraction and elemental sulfur generated in the reaction of the pre-step were removed by filtration.

From the cobalt and nickel solution obtained in this way, a cobalt sulfate solution and a nickel sulfate solution were separated and recovered with a mixer-settler using an extractant solution obtained by mixing 20 vol% of PC88A (manufactured by DAIHACHI CHEMICAL INDUSTRY Co., Ltd.) as a metal extractant and 80 vol% of kerosene (solvent extracting step).

According to the above procedure of Example A1, the amount of the obtained cobalt was 93% and the amount of the obtained nickel was 93% in terms of yield in the back extraction in a case where the amounts of cobalt and nickel in the electrode material taken out from the discarded LIB were 100%. Therefore, with the method for separating cobalt and nickel including the method for leaching an electrode material according to the present embodiment, it was found that cobalt and nickel could be recovered from the discarded LIB with a high yield.

The metal concentration was measured by ICP-AES, the pH was measured with a pH meter, and the ORP was measured with an ORP meter. The numerical value of % was based on mass.

(Example 1-2)

40 mL of a sulfuric acid solution having a concentration of 47 wt% was added to 29.0 g of an electrode material (electrode active material) taken out from a discarded LIB, and the mixture was kneaded for 15 minutes by a rubber spatula to obtain a leaching paste (kneading step). 10 mL of a hydrogen peroxide solution having a concentration of 30 wt% was added to the leaching paste, and the mixture was stirred with a rubber spatula for 5 minutes (kneading step of Example A2).

Table 3 shows a leaching test result of the electrode material (electrode active material) after the kneading step of Example A2. "Time (min)" in Table 3 indicates an elapsed time from the addition of distilled water in the diluting step. In addition, in the table, "pH", "Temperature", and "ORP" indicate values at each point in time; "Cumulative addition amount" (sulfuric acid, hydrogen peroxide, NaSH, and NaOH) indicates the total addition amount at each point in time; and "Concentration" indicates a metal concentration at each point in time.

Thereafter, 160 mL of distilled water was added to the obtained leaching paste for dilution (diluting step), and stirring was started (Experimental Example 1B1).

The mixture of Experimental Example 1B1 was stirred for 30 minutes at a liquid temperature of around 50°C while confirming that the pH was 2.0 or less (Experimental Example 1B2).

A sodium hydrosulfide solution having a concentration of 200 g/L was added to the reaction solution of Experimental Example 1B2 until the ORP was 0 mV or less (copper separating step, Experimental Example 1B3).

A sodium hydroxide solution having a concentration of 25 wt% was added to the leachate of Experimental Example 1B3 for neutralization, and the pH was stabilized to 3.0 to 4.0 (neutralizing step, Experimental Example 1B4).

The reaction solution of Experimental Example 1B4 was subjected to a solid-liquid separation by filtration to separate carbon of the anode material of the discarded LIB, which was insoluble in the sulfuric acid leaching, and the produced residue (copper sulfide); and thereby, 175 mL of a leachate was obtained. The composition of 14.41 g of the residue (copper sulfide) is shown in Table 4. In a case where the amounts of cobalt and nickel in the electrode material taken out from the discarded LIB were 100%, the leaching rate was calculated to be 95% for the cobalt and 95% for the nickel, so that the cobalt and the nickel were sufficiently leached from the active material.

[Table 3]

| Experimental Example | Time (min) | pH | Temperature (°C) | ORP (mV) | Cumulative addition amount (mL) | | | | Concentration (g/L) | | | | | |
|---|---|---|---|---|---|---|---|---|---|---|---|---|---|---|
| | | | | | $H_2SO_4$ | $H_2O_2$ | NaSH | NaOH | Ni | Co | Mn | Li | Al | Cu |
| 1B1 | 0 | 1.87 | 32.6 | 544 | 40 | 10 | 0 | 0 | - | - | - | - | - | - |
| 1B2 | 30 | 1.73 | 47.0 | 378 | 40 | 10 | 0 | 0 | 13.66 | 15.35 | 12.84 | 5.97 | 2.69 | 1.59 |
| 1B3 | 35 | 1.78 | 44.8 | -6 | 40 | 10 | 4.5 | 0 | 13.26 | 14.85 | 12.66 | 5.85 | 2.65 | 0.00 |
| 1B4 | 74 | 3.87 | 30.9 | 163 | 40 | 10 | 4.5 | 15 | 12.60 | 14.04 | 12.00 | 5.12 | 1.14 | 0.00 |

[Table 4]

| Ni wt% | Co wt% | Mn wt% | Al wt% | Cu wt% |
|---|---|---|---|---|
| 0.82 | 0.86 | 0.25 | 5.20 | 3.77 |

(Comparative Example)

100 mL of a sulfuric acid solution containing 31 mL of sulfuric acid having a concentration of 47 wt% was added to 14.5 g of an electrode material (electrode active material) taken out from a discarded LIB, and the mixture was stirred. Then, 10 mL of a hydrogen peroxide solution having a concentration of 30 wt% was added thereto at a liquid temperature of 60°C, the mixture was subjected to leaching for 4 hours, and a solid-liquid separation was performed by filtration to obtain a leachate. The leaching rates of cobalt and nickel were both 98% or more.

It was found that, the leaching rates of the cobalt and the nickel equivalent to those of Comparative Example of performing the leaching for 4 hours could be achieved in a short time of 75 minutes in Example A1 (Experimental Example 1A2) and 30 minutes in Example A2.

[Example 2]

The effects of the method for separating cobalt and nickel, including the method for leaching an electrode material according to the embodiment of the present invention, were examined.

(Verification Example 2-1)

Table 5 shows test results from the leaching step to the copper precipitating step.

"Time (min)" in Table 5 indicates an elapsed time from the addition of the electrode material to the sulfuric acid solution. In addition, "pH", "Temperature", and "ORP" indicate values at each step; "Cumulative addition amount" (sulfuric acid, n-hexanol, hydrogen peroxide, NaSH, and NaOH) indicates the total addition amount at each point in time; and "Concentration" indicates a metal concentration at each point in time.

In the procedure of each step, 200 mL of a sulfuric acid solution containing 38 mL of sulfuric acid having a concentration of 47% by mass was added to 29.0 g of an electrode material (electrode active material) taken out from a discarded LIB, and the mixture was stirred. A change over time from the addition of the electrode material was taken, and 0.2 mL of n-hexanol was added thereto, and then the mixture was stirred until antifoaming was completed (Experimental Example 2A1). Then, 10 mL of hydrogen peroxide water having a concentration of 30% by mass was added thereto over 78 minutes (Experimental Example 2A2). Then, a sodium hydrosulfide aqueous solution having a concentration of 200 g/L was added thereto until the ORP was stabilized at 0 mV or less (Experimental Example 2A3). Next, a sodium hydroxide aqueous solution having a concentration of 25% by mass was added to the leachate, and the pH was stabilized to 3.0 to 4.0 (Experimental Example 2A4). Thereafter, carbon of the anode material of the discarded LIB, which was insoluble in the sulfuric acid leaching, and the produced residue (copper sulfide) were subjected to a solid-liquid separation by filtration; and thereby, 180 mL of a leachate was obtained. Table 6 shows the composition of 14.02 g of the residue (copper sulfide). In a case where the amounts of cobalt and nickel in the electrode material taken out from the discarded LIB were 100% by mass, the leaching rate was calculated to be 95% by mass or more for the cobalt and for the nickel, so that it was found that the cobalt and the nickel were sufficiently leached from the active material compared with the method in the related art.

[Table 5]

| Experimental Example | Time (min) | pH | T-pH (°C) | ORP (mV) | Cumulative addition amount (mL) | | | | | Concentration (g/L) | | | | | |
|---|---|---|---|---|---|---|---|---|---|---|---|---|---|---|---|
| | | | | | $H_2SO_4$ | n-HexOH | $H_2O_2$ | NaSH | NaOH | Ni | Co | Mn | Li | Al | Cu |
| 2A1 | 22 | 1.95 | 63.1 | 266 | 38 | 0.2 | 0 | 0 | 0 | 12.64 | 13.80 | 11.74 | 5.66 | 2.56 | 0.44 |
| 2A2 | 100 | 1.81 | 52.8 | 516 | 40 | 0.4 | 10 | 0 | 0 | 13.48 | 15.06 | 12.58 | 5.86 | 2.83 | 2.41 |
| 2A3 | 113 | 1.74 | 43.2 | -3 | 40 | 0.4 | 10 | 4.25 | 0 | 13.08 | 14.46 | 12.35 | 5.78 | 2.78 | 0.00 |
| 2A4 | 150 | 3.43 | 32.4 | 170 | 40 | 0.4 | 10 | 4.25 | 16 | 12.41 | 13.70 | 11.70 | 5.03 | 0.89 | 0.00 |

[Table 6]

| Amount (wt%) | | | | |
|---|---|---|---|---|
| Ni | Co | Mn | Al | Cu |
| 0.86 | 0.98 | 0.33 | 5.93 | 4.47 |

Next, the leachate obtained in the leaching step was cooled to room temperature, and a sodium hydrogen sulfide aqueous solution obtained by dissolving sodium hydrogen sulfide in ion exchange water to have a concentration of 250 g/L with stirring was added to the leachate while stirring until the oxidation reduction potential (ORP) of the leachate was 0 mV (vs Ag/AgCl) or less (copper separating step).

At the stage, a solid-liquid separation was performed by filtering carbon of the anode material of the discarded LIB, which was insoluble in the sulfuric acid leaching, and the produced residue (copper sulfide). A sodium hydroxide solution having a concentration of 25 wt% was added to the eluate thus obtained to adjust the pH to be 3.5, and a sodium hydrogen sulfide aqueous solution having a concentration of 250 g/L was added thereto while stirring until the ORP was -400 mV (vs Ag/AgCl) or less.

Then, after confirming that black precipitate substance (cobalt sulfide and nickel sulfide) was sufficiently generated, a solid-liquid separation was performed to recover the precipitate substance (cobalt and nickel separating step). On the other hand, impurities such as manganese, aluminum, iron, lithium, and calcium remained in the residual liquid, and thus were disposed of as a metal-containing waste liquid.

The precipitate substance was added to a re-dissolution liquid containing 100 mL of a sulfuric acid solution having a concentration of 1.5 mol/L and 20 mL of hydrogen peroxide water having a concentration of 30 wt%, and the mixture was heated to a liquid temperature of 60°C and stirred for 1 hour (re-dissolution step). Thereafter, the mixture was cooled to room temperature, and then an undissolved fraction and elemental sulfur generated in the reaction of the pre-step were removed by filtration.

From the cobalt and nickel solution obtained in this way, a cobalt sulfate solution and a nickel sulfate solution were separated and recovered with a mixer-settler using an extractant solution obtained by mixing 20 vol% of PC88A (manufactured by DAIHACHI CHEMICAL INDUSTRY Co., Ltd.) as a metal extractant and 80 vol% of kerosene (solvent extracting step).

According to the above procedure of Invention Example, the amount of the obtained cobalt was 96.4% and the amount of the obtained nickel was 95.3% in terms of yield in the back extraction in a case where the amounts of cobalt and nickel in the electrode material taken out from the discarded LIB were 100%. Therefore, with the method for separating cobalt and nickel including the method for leaching an electrode material according to the present embodiment, it was found that cobalt and nickel could be recovered from the discarded LIB with a high yield.

The metal concentration was measured by ICP-AES, the pH was measured with a pH meter, and the ORP was measured with an ORP meter. The numerical value of % was based on mass.

(Verification Example 2-2)

The effect was examined according to the type of the antifoaming agent in the leaching step.

As the antifoaming agent, methanol (number of carbon atoms: 1; Bl), ethanol (number of carbon atoms: 2; B2), n-butanol (number of carbon atoms: 4; B3), pentanol (number of carbon atoms: 5; B4), hexanol (number of carbon atoms: 6; B5), heptanol (number of carbon atoms: 7; B6), or octanol (number of carbon atoms: 8; B7) was used.

14.5 g of an electrode material (electrode active material) was added to 100 mL of a sulfuric acid solution containing 18 mL of sulfuric acid having a concentration of 47% by mass, and 7 solutions were prepared by adjusting the temperature to be around 60°C. As the antifoaming agent, each of the alcohols having different numbers of carbon atoms as described above was added to one of these solutions. Thereafter, hydrogen peroxide solution having a concentration of 30% by mass was added thereto, and leaching was performed while adding the antifoaming agent as appropriate in a case where foaming occurred. The results are shown in Table 7. In Table 7, the liquid amount (mL) of the antifoaming agent indicates the minimum liquid amount of the alcohol required for the antifoaming, and "Sulfuric acid (mL)" and "Hydrogen peroxide (mL)" indicate the final cumulative addition amount. From Table 7, it was found that the addition amount was minimal in the case where the alcohol had 5 to 7 carbon atoms. It was found that a balance between hydrophilicity and hydrophobicity was important, and that an alcohol having high hydrophilicity, such as methanol, or an alcohol having high hydrophobicity, such as n-octanol, required a large amount of alcohols for the antifoaming.

[Table 7]

| Experimental Example | Antifoaming agent | | Active material (g) | Initial liquid amount (mL) | Sulfuric acid (mL) | Hydrogen peroxide (mL) |
|---|---|---|---|---|---|---|
| | Type | Liquid amount (mL) | | | | |
| 2B1 | Methanol | 9 | 14.5 | 100 | 18 | 5 |
| 2B2 | Ethanol | 4 | 14.5 | 100 | 18 | 5 |
| 2B3 | n-Butanol | 1 | 14.5 | 100 | 18 | 5 |
| 2B4 | n-Pentanol | 0.1 | 14.5 | 100 | 18 | 5 |
| 2B5 | n-Hexanol | 0.1 | 14.5 | 100 | 18 | 5 |
| 2B6 | n-Heptanol | 0.1 | 14.5 | 100 | 18 | 5 |
| 2B7 | n-Octanol | 2 | 14.5 | 100 | 18 | 5 |

(Verification Example 2-3)

As a comparative example of the related art, the leaching step was performed without adding the alcohol as the antifoaming agent.

14.5 g of an electrode material (electrode active material) was added to 100 mL of a sulfuric acid solution containing 31 mL of sulfuric acid having a concentration of 47% by mass, and the mixture was stirred. Then, 10 mL of hydrogen peroxide solution having a concentration of 30% by mass was added thereto at a liquid temperature of 60°C, the mixture was subjected to leaching for 4 hours, and a solid-liquid separation was performed by filtration to obtain a leachate. The leaching rates of cobalt and nickel were both 98% by mass or more. As described above, in the comparative example of the related art, in which the alcohol was not added in the leaching step, the leaching required 4 hours. On the other hand, according to Verification Example B1 described above, in Experimental Examples of the present invention, in which the alcohol was added in the leaching step, the leaching rates of the cobalt and the nickel equivalent to those of the comparative example of the related art (Verification Example 2-3) were achieved in a short time of 100 minutes (Experiment Example 2A2). Therefore, the effect of the present invention was confirmed.

[Example 3]

The effects of the method for separating cobalt and nickel, including the leaching method according to the embodiment of the present invention, were examined.

(Verification Example 3-1)

Table 8 shows test results from the leaching step to the copper separating step.

"Time (min)" in Table 8 indicates an elapsed time from the start of the addition of iron powder. In addition, "pH", "Temperature", and "ORP" indicate values at each step; "Cumulative addition amount" (sulfuric acid, iron, NaSH, and NaOH) indicates the total addition amount at each point in time; and "Concentration" indicates a metal concentration at each point in time.

In the procedure of each step, 500 mL of a sulfuric acid solution containing 85 mL of sulfuric acid having a concentration of 47% by mass was added to 72.5 g of an electrode material (electrode active material) taken out from a discarded LIB, and the mixture was stirred (sulfuric acid adding step, Experimental Example 3A1). Then, the liquid temperature was stabilized to be around 60°C, and a sulfuric acid solution having a concentration of 47% by mass was added thereto until the pH was 2 or less (Experimental Example 3A2). The iron powder was added as appropriate until the ORP was stabilized to be 400 mV or less, while confirming a change over time from the start of addition of iron powder (iron powder adding step and ORP measuring step, Experimental Examples 3A3 to 3A6). The heating was stopped at a point in time when the ORP was stabilized at 400 mV or less, and a sodium hydrosulfide solution having a concentration of 200 g/L was added thereto until the ORP was 0 mV or less (copper separating step, Experimental Example 3A7). A sodium hydroxide solution having a concentration of 25% by mass was added to the leachate, and the pH was stabilized to 3.0 to 4.0 (Experimental Example 3A8). Thereafter, carbon of the anode material of the discarded LIB, which was insoluble in the sulfuric acid leaching, and the produced residue (copper sulfide) were subjected to a solid-liquid separation by filtration; and thereby, 490 mL of a leachate was obtained. Table 9 shows the composition of 33.06 g of the residue (copper sulfide). In a case where the amounts of cobalt and nickel in the electrode material taken out from the discarded LIB were 100% by mass, the leaching rate was calculated to be 95% by mass or more for the cobalt and for the nickel, so that it was found that the cobalt and the nickel were sufficiently leached from the active material compared with the method in the related art.

[Table 8]

| Experimental Example | Time (min) | pH | Temperature (°C) | ORP (mV) | Cumulative addition amount of sulfuric acid (mL) | Cumulative addition amount of iron (g) | Cumulative addition amount of NaSH (mL) | Cumulative addition amount of NaOH (mL) | Concentration (g/L) | | | | | | |
|---|---|---|---|---|---|---|---|---|---|---|---|---|---|---|---|
| | | | | | | | | | Ni | Co | Mn | Li | Al | Cu | Fe |
| 3A1 | 0 | 2.52 | 60.3 | 823 | 85 | 0 | 0 | 0 | 14.36 | 15.45 | 11.16 | 5.95 | 0.44 | 0.60 | 0.14 |
| 3A2 | 0 | 1.87 | 58.5 | 1018 | 110 | 0 | 0 | 0 | 13.76 | 14.80 | 10.73 | 5.87 | 0.46 | 0.58 | 0.16 |
| 3A3 | 9 | 1.84 | 58.9 | 657 | 120 | 0.5 | 0 | 0 | 13.90 | 15.29 | 10.92 | 6.04 | 0.46 | 0.59 | 1.13 |
| 3A4 | 24 | 1.92 | 59.0 | 621 | 120 | 1.0 | 0 | 0 | 14.37 | 16.09 | 11.28 | 6.28 | 0.47 | 0.62 | 2.12 |
| 3A5 | 45 | 1.93 | 58.1 | 424 | 120 | 1.5 | 0 | 0 | 14.71 | 16.64 | 11.53 | 6.47 | 0.48 | 0.63 | 3.11 |
| 3A6 | 95 | 1.89 | 58.3 | 316 | 120 | 2.1 | 0 | 0 | 15.01 | 17.00 | 11.84 | 6.70 | 0.49 | 0.64 | 4.39 |
| 3A7 | 102 | 1.94 | 55.4 | -9 | 120 | 2.1 | 11.5 | 0 | 14.56 | 16.47 | 11.60 | 6.49 | 0.40 | 0.00 | 4.30 |
| 3A8 | 141 | 3.39 | 44.3 | 83 | 120 | 2.1 | 11.5 | 63 | 13.05 | 14.73 | 10.30 | 5.52 | 0.00 | 0.00 | 3.36 |

[Table 9]

| Amount (wt%) | | | | | |
|---|---|---|---|---|---|
| Ni | Co | Mn | Al | Cu | Fe |
| 0.69 | 0.96 | 0.11 | 3.60 | 1.62 | 0.44 |

(Verification Example 3-2)

Table 10 shows test results of the cobalt and nickel separating step. "Time (min)" in Table 10 indicates an elapsed time from the start of the addition of the sodium hydrosulfide solution. In addition, in Table 10, "pH", "Temperature", and "ORP" indicate values at each step; and "Cumulative addition amount" (NaSH and NaOH) indicates the total addition amount at each point in time.

A sodium hydroxide solution having a concentration of 25% by mass and a sodium hydrosulfide solution having a concentration of 200 g/L were added to the obtained leachate (Experimental Example 3B1) while stirring until the ORP was -400 mV or less (Experimental Examples 3B2 to 3B8). After confirming that the ORP was -400 mV or less, a solid-liquid separation was performed to recover 142.52 g (weight before drying) of black precipitate substance (cobalt sulfide and nickel sulfide) (cobalt and nickel separating step). Table 11 shows the composition of 500 mL of the residual liquid. In Verification Example 3-2, the treatment was performed as a metal-containing waste liquid.

[Table 10]

| Experimental Example | Time (min) | pH | Temperature (°C) | ORP (mV) | Cumulative addition amount (mL) | |
|---|---|---|---|---|---|---|
| | | | | | NaSH | NaOH |
| 3B1 | 0 | 3.52 | 22.0 | 92 | 0 | 0 |
| 3B2 | 3 | 2.88 | 23.0 | -310 | 15 | 5 |
| 3B3 | 6 | 3.04 | 24.1 | -309 | 30 | 11 |
| 3B4 | 9 | 3.06 | 25.0 | -313 | 45 | 16 |
| 3B5 | 12 | 3.03 | 25.9 | -324 | 60 | 21 |
| 3B6 | 15 | 2.99 | 26.5 | -342 | 75 | 26 |
| 3B7 | 18 | 3.12 | 27.3 | -385 | 90 | 31 |
| 3B8 | 21 | 3.14 | 27.2 | -405 | 96 | 31 |

[Table 11]

| Concentration (g/L) | | | |
|---|---|---|---|
| Ni | Co | Mn | Fe |
| 0.03 | 0.15 | 8.20 | 2.45 |

(Verification Example 3-3)

The precipitate substance was repulped with 500 mL of a sulfuric acid solution containing 2 mL of sulfuric acid having a concentration of 47% by mass, and then a solid-liquid separation was performed by filtration to obtain 118.73 g of precipitate substance (weight before drying). Table 12 shows the composition of 500 mL of the repulped residual liquid. In Verification Example 3-3, the treatment was performed as a metal-containing waste liquid. The repulped residual liquid may be returned as a liquid to be used in the leaching step.

[Table 12]

| Concentration (g/L) | | | |
|---|---|---|---|
| Ni | Co | Mn | Fe |
| 0.21 | 0.53 | 1.46 | 0.52 |

(Verification Example 3-4)

Table 13 shows test results of the re-dissolution step. "Time (min)" in Table 13 indicates an elapsed time from the start of the addition of hydrogen peroxide. In addition, in Table 13, "pH", "Temperature", and "ORP" indicate values at each point in time; and "Cumulative addition amount" ($H_2SO_4$, NaSH, and NaOH) indicates the total addition amount at each point in time. 500 mL of distilled water was added to the precipitate substance, and the mixture was stirred (Experimental Example 3C1). Hydrogen peroxide water having a concentration of 30% by mass was added thereto, while adding a sulfuric acid solution having a concentration of 47% by mass thereto so that the pH was adjusted to be 1.5 to 2.0; and thereby, cobalt and nickel were dissolved (re-dissolution step, Experimental Examples 3C2 to 3C4). After the dissolution, a sodium hydroxide solution having a concentration of 25% by mass was added thereto to adjust the pH to be 3.0 to 5.0 (Experimental Example 3C5). An undissolved fraction and elemental sulfur generated in the reaction of the pre-step were filtered for solid-liquid separation; and thereby, 650 mL of a cobalt and nickel solution was obtained. The elemental sulfur may be returned to the leaching step.

[Table 13]

| Experimental Example | Time (min) | pH | Temperature (°C) | ORP (mV) | Cumulative addition amount (mL) | | | Concentration (g/L) | | | |
|---|---|---|---|---|---|---|---|---|---|---|---|
| | | | | | $H_2SO_4$ | $H_2O_2$ | NaOH | Ni | Co | Mn | Fe |
| 3C1 | 0 | 6.82 | 41.6 | -327 | 0 | 0 | 0 | 0.06 | 0.16 | 0.19 | 0.06 |
| 3C2 | 0 | 1.88 | 42.6 | -291 | 3 | 0 | 0 | 0.31 | 0.48 | 0.24 | 0.14 |
| 3C3 | 18 | 1.80 | 63.0 | 150 | 18 | 50 | 0 | 7.70 | 6.17 | 0.27 | 0.34 |
| 3C4 | 59 | 1.44 | 51.4 | 401 | 21 | 100 | 0 | 8.64 | 8.47 | 0.26 | 0.43 |
| 3C5 | 82 | 4.29 | 42.8 | 217 | 21 | 100 | 20 | 8.54 | 8.38 | 0.26 | 0.35 |

(Verification Example 3-5)

Table 14 shows test results of the iron separating step. In order to remove iron and manganese remaining in the cobalt and nickel-containing solution (Experimental Example 3D1), iron and manganese were precipitated and removed using a sodium hypochlorite solution having a concentration of 12% by mass while maintaining a pH at 3.0 to 5.0 (Experimental Examples 3D2 to 3D4). In this case, in Experimental Examples 3D2 and 3D3, the ORP was smaller than a value of $-153.18 \times pH + 1577.2$ (mV) by 100 mV or more, and the manganese was not removed. In a case where the iron and manganese were completely precipitated, the ORP was determined to a value close to the expression 1 (Experimental Example 3D4).

$$ORP = -153.18 \times pH + 1577.2 \pm 30 \text{ (mV)} \ldots (1)$$

The precipitate substance of iron (111) hydroxide and manganese dioxide generated in the reaction were subjected to a solid-liquid separation by filtration; and thereby, 650 mL of a cobalt and nickel purified solution was obtained. The precipitate substance of iron (111) hydroxide and manganese dioxide may contain cobalt, and the precipitate substance may be returned to the leaching step and dissolved.

[Table 14]

| Experimental Example | Time (min) | pH | Temperature (°C) | ORP (mV) | Cumulative addition amount (mL) | | Concentration (g/L) | | | |
|---|---|---|---|---|---|---|---|---|---|---|
| | | | | | NaClO | NaOH | Ni | Co | Mn | Fe |
| 3D1 | 0 | 4.18 | 22.9 | 247 | 0 | 0 | 8.54 | 8.38 | 0.26 | 0.35 |
| 3D2 | 40 | 4.45 | 22.6 | 724 | 3 | 1.3 | 8.45 | 8.38 | 0.21 | 0.00 |
| 3D3 | 84 | 3.72 | 22.3 | 838 | 5.5 | 1.3 | 8.45 | 8.33 | 0.04 | 0.00 |
| 3D4 | 132 | 3.71 | 22.2 | 995 | 5.5 | 3.3 | 8.36 | 7.88 | 0.00 | 0.00 |

From the cobalt and nickel purified solution obtained in this way, a cobalt sulfate solution and a nickel sulfate solution were separated and recovered with a mixer-settler using an extractant solution obtained by mixing 20% by volume of PC88A (manufactured by DAIHACHI CHEMICAL INDUSTRY Co., Ltd.) as a metal extractant and 80% by volume of kerosene (solvent extracting step).

According to the above procedure of Invention Example, the amount of the obtained cobalt was 89% by mass and the amount of the obtained nickel was 93% by mass in terms of yield in the back extraction in a case where the amounts of cobalt and nickel in the electrode material taken out from the discarded LIB were 100% by mass. In addition, the amount of iron was 10 ppm or less. Therefore, with the method for separating cobalt and nickel including the leaching method according to the present embodiment, it was found that cobalt and nickel could be recovered from the discarded LIB with a high yield.

The metal concentration was measured by ICP-AES, the pH was measured with a pH meter, and the ORP was measured with an ORP meter. The numerical value of % was based on mass.

(Verification Example 3-6)

The influence of the liquid temperature on the leaching step was examined.

Table 15 shows test results of the leaching step at 40°C. "Time (min)" in Table 15 indicates an elapsed time from the start of the addition of iron powder. In addition, in Table 15, "pH", "Temperature", and "ORP" indicate values at each point in time; and "Cumulative addition amount" (sulfuric acid and iron) indicates the total addition amount at each point in time. 29.0 g of an electrode material (active material) was added to 200 mL of a sulfuric acid solution containing 34 mL of sulfuric acid having a concentration of 47% by mass (Experimental Example 3E1). The solution was stabilized at 40°C, and a sulfuric acid solution having a concentration of 47% by mass was further added thereto so that the pH was less than 2.0 (Experimental Example 3E2). Fe was added thereto, and a change over time of the ORP from the start of the addition was examined (Experimental Examples 3E3 to 3E10).

[Table 15]

| Experimental Example | Time (min) | pH | Temperature (°C) | ORP (mV) | Cumulative addition amount of sulfuric acid (mL) | Cumulative addition amount of iron (g) |
|---|---|---|---|---|---|---|
| 3E1 | 0 | 1.94 | 40.9 | 882 | 34 | 0 |
| 3E2 | 0 | 1.64 | 41.4 | 1001 | 37 | 0 |
| 3E3 | 1 | 1.66 | 40.6 | 441 | 37 | 0.2 |
| 3E4 | 27 | 1.68 | 39.9 | 606 | 37 | 0.2 |
| 3E5 | 28 | 1.72 | 40.2 | 480 | 37 | 0.4 |
| 3E6 | 120 | 1.72 | 41.1 | 596 | 37 | 0.4 |
| 3E7 | 123 | 1.73 | 40.6 | 428 | 37 | 0.6 |
| 3E8 | 202 | 1.74 | 39.4 | 356 | 37 | 0.6 |
| 3E9 | 208 | 1.76 | 39.1 | 358 | 37 | 0.65 |
| 3E10 | 240 | 1.77 | 40.1 | 336 | 37 | 0.65 |

Table 16 shows test results of the leaching step at 50°C. "Time (min)" in Table 16 indicates an elapsed time from the start of the addition of iron powder. In addition, in Table 16, "pH", "Temperature", and "ORP" indicate values at each point in time; and "Cumulative addition amount" ($H_2SO_4$ and iron) indicates the total addition amount at each point in time. 29.0 g of an electrode material (active material) was added to 200 mL of a sulfuric acid solution containing 34 mL of sulfuric acid having a concentration of 47% by mass (Experimental Example 3F1). The solution was stabilized at 50°C, and a sulfuric acid solution having a concentration of 47% by mass was further added thereto so that the pH was less than 2.0 (Experimental Example 3F2). Iron was added thereto, and a change over time of the ORP from the start of the addition was examined (Experimental Examples 3F3 to 3F10).

[Table 16]

| Experimental Example | Time (min) | pH | Temperature (°C) | ORP (mV) | Cumulative addition amount of sulfuric acid (mL) | Cumulative addition amount of iron (g) |
|---|---|---|---|---|---|---|
| 3F1 | 0 | 2.28 | 44.0 | 913 | 34 | 0 |
| 3F2 | 0 | 1.91 | 51.5 | 1005 | 41 | 0 |
| 3F3 | 1 | 1.93 | 51.2 | 330 | 41 | 0.2 |
| 3F4 | 20 | 1.92 | 50.8 | 604 | 43 | 0.2 |
| 3F5 | 21 | 1.89 | 50.9 | 466 | 43 | 0.4 |
| 3F6 | 50 | 1.81 | 50.4 | 603 | 45 | 0.4 |
| 3F7 | 51 | 1.88 | 50.1 | 493 | 45 | 0.6 |
| 3F8 | 76 | 1.94 | 49.5 | 410 | 46 | 0.6 |
| 3F9 | 77 | 1.95 | 49.5 | 409 | 46 | 0.65 |
| 3F10 | 104 | 1.96 | 49.5 | 400 | 46 | 0.65 |

Table 17 shows test results of the leaching step at 60°C. "Time (min)" in Table 17 indicates an elapsed time from the start of the addition of iron powder. In addition, in Table 17, "pH", "Temperature", and "ORP" indicate values at each point in time; and "Cumulative addition amount" ($H_2SO_4$ and iron) indicates the total addition amount at each point in time. 29.0 g of an electrode material (active material) was added to 200 mL of a sulfuric acid solution containing 34 mL of sulfuric acid having a concentration of 47% by mass (Experimental Example 3G1). The solution was stabilized at 60°C, and a sulfuric acid solution having a concentration of 47% by mass was further added thereto so that the pH was less than 2.0 (Experimental Example 3G2). Iron was added thereto, and a change over time of the ORP from the start of the addition was examined (Experimental Examples 3G3 to 3G10).

[Table 17]

| Experimental Example | Time (min) | pH | Temperature (°C) | ORP (mV) | Cumulative addition amount of sulfuric acid (mL) | Cumulative addition amount of iron (g) |
|---|---|---|---|---|---|---|
| 3G1 | 0 | 2.26 | 61.1 | 822 | 34 | 0 |
| 3G2 | 0 | 1.86 | 59.0 | 974 | 40 | 0 |
| 3G3 | 1 | 1.89 | 57.7 | 488 | 40 | 0.2 |
| 3G4 | 10 | 1.85 | 59.3 | 605 | 42 | 0.2 |
| 3G5 | 11 | 1.86 | 59.3 | 493 | 42 | 0.4 |
| 3G6 | 28 | 1.75 | 58.3 | 601 | 42 | 0.4 |
| 3G7 | 29 | 1.75 | 58.0 | 481 | 42 | 0.6 |
| 3G8 | 40 | 1.79 | 60.3 | 389 | 42 | 0.6 |
| 3G9 | 41 | 1.79 | 59.2 | 386 | 42 | 0.65 |
| 3G10 | 47 | 1.77 | 59.0 | 380 | 42 | 0.65 |

According to the results of Verification Example 3-6 shown in Tables 15 to 17, it was found that, as the liquid temperature was higher, the time required for reaching the stable ORP value in each addition stage of the iron powder was shorter. In the solution having a liquid temperature of 60°C, the time until the end point of reaction could be shortened to approximately 1/5 as compared with the solution having a liquid temperature of 40°C. On the other hand, even in a case where the liquid temperature was excessively increased, the effect of shortening the time until the end point of reaction was not improved. FIG. 8 is a graph representing the change in ORP due to the addition of iron powder at liquid temperatures of 60°C, 50°C, and 40°C in Verification Example 3-6.

(Verification Example 3-7: Conventional Example)

100 mL of a sulfuric acid solution containing 31 mL of sulfuric acid having a concentration of 47% by mass was added to 14.5 g of an electrode material (electrode active material) taken out from a discarded LIB, and the mixture was stirred. Then, 10 mL of a hydrogen peroxide solution having a concentration of 30% by mass was added thereto at a liquid temperature of 60°C, the mixture was subjected to leaching for 4 hours, and a solid-liquid separation was performed by filtration to obtain a leachate. The leaching rates of cobalt and nickel were both 98% by mass or more, and the amount of iron was 10 ppm or less.

(Verification Example 3-8)

Table 18 shows the composition of the CoNi-containing solution used as the starting raw material in Verification Example 3-8. In addition, Tables 19, 21, and 22 show results of the manganese removal test in which the pH was adjusted to be near 3, 4, and 5, respectively. "Time (min)" in Tables 19 to 21 indicates an elapsed time from the start of the addition of the sodium hypochlorite solution. In addition, in the tables, "pH", "Temperature", and "ORP" indicate values at each point in time; "Cumulative addition amount" (NaClO, NaOH, and $H_2SO_4$) indicates the total addition amount at each point in time; and "Concentration" indicates a metal concentration at each point in time. The pH of the CoNi-containing solution was adjusted to produce 300 mL of CoNi-containing solutions having a pH of near 3, 4, and 5, respectively (pH 3: Comparative Example 3aa1, pH 4: Comparative Example 3ab1, pH 3: Comparative Example 3ac1), and a sodium hypochlorite solution having a concentration of 12% by mass was added thereto to remove manganese.

Each of the state in which the sodium hypochlorite solution was started to be added and the manganese was left (Comparative Examples 3aa2, 3aa3, 3ab2, and 3ab2) and the state in which the manganese was precipitated and removed (Comparative Examples 3aa4, 3ab3, and 3ac3) could be linearly approximated, and an approximate expression of the state in which the manganese was completely precipitated and removed (Comparative Examples 3aa4, 3ab3, and 3ac3) was "ORP = -153.18 × pH + 1577.2". Since iron was more likely to be oxidized and precipitated than the manganese in a range of approximately ±30 mV of the ORP of the approximate expression, the iron could also be precipitated and removed at the same time as the manganese in a case where the ORP was the value in the state in which manganese was completely precipitated.

[Table 18]

| Concentration (g/L) | | | | | | |
|---|---|---|---|---|---|---|
| Ni | Co | Mn | Li | Al | Cu | Fe |
| 7.37 | 8.04 | 0.15 | 0.03 | 0.04 | 0.00 | 0.00 |

[Table 19]

| Comparative Example | Time (min) | pH | T (°C) | ORP (mV) | Cumulative addition amount (mL) | | | Concentration (g/L) | |
|---|---|---|---|---|---|---|---|---|---|
| | | | | | NaClO | NaOH | $H_2SO_4$ | Co | Mn |
| 3aa1 | 0 | 3.02 | 22.0 | 837 | 0.00 | 0.00 | 0.10 | 8.04 | 0.15 |
| 3aa2 | 12 | 3.00 | 21.9 | 932 | 0.80 | 0.00 | 0.15 | 7.67 | 0.11 |
| 3aa3 | 22 | 3.10 | 21.9 | 939 | 2.00 | 0.00 | 0.20 | 7.72 | 0.04 |
| 3aa4 | 129 | 2.96 | 21.8 | 1124 | 2.40 | 0.90 | 0.20 | 7.28 | 0.00 |

[Table 20]

| Comparative Example | Time (min) | pH | T (°C) | ORP (mV) | Cumulative addition amount (mL) | | | Concentration (g/L) | |
|---|---|---|---|---|---|---|---|---|---|
| | | | | | NaClO | NaOH | $H_2SO_4$ | Co | Mn |
| 3ab1 | 0 | 3.92 | 21.5 | 731 | 0.00 | 0.00 | 0.01 | 8.04 | 0.15 |
| 3ab2 | 12 | 3.88 | 21.5 | 830 | 0.80 | 0.00 | 0.04 | 7.77 | 0.10 |
| 3ab3 | 50 | 4.00 | 21.8 | 964 | 2.00 | 1.50 | 0.06 | 6.93 | 0.00 |

[Table 21]

| Comparative Example | Time (min) | pH | T (°C) | ORP (mV) | Cumulative addition amount (mL) | | | Concentration (g/L) | |
|---|---|---|---|---|---|---|---|---|---|
| | | | | | NaClO | NaOH | $H_2SO_4$ | Co | Mn |
| 3ac1 | 0 | 5.20 | 21.0 | 537 | 0.00 | 0.06 | 0.03 | 8.04 | 0.15 |
| 3ac2 | 19 | 4.80 | 20.9 | 717 | 0.80 | 0.26 | 0.03 | 7.42 | 0.07 |
| 3ac3 | 43 | 4.86 | 21.1 | 833 | 2.00 | 1.96 | 0.03 | 6.84 | 0.00 |

[Example 4]

The effects of the method for separating cobalt and nickel according to the embodiment of the present invention were examined.

(Procedure of Invention Examples)

72.5 g of an electrode material taken out from a discarded LIB was put into 200 mL of distilled water, and stirred for 20 minutes (washing step). Thereafter, the mixture was filtered to obtain 95.7 g of an electrode material (in a non-dried state) and 162 mL of a washing discharge liquid. The pH of the washing discharge liquid was 10.9, and the composition thereof is shown in Table 22.

[Table 22]

| Concentration (g/L) | | | | | |
|---|---|---|---|---|---|
| Ni | Co | Mn | Li | Al | Cu |
| 0.00 | 0.00 | 0.00 | 2.54 | 0.08 | 0.00 |

Table 23 shows test results of leaching the electrode material (in a non-dried state) (leaching step). "Time (min)" in Table 23 indicates an elapsed time from the start of the addition of hydrogen peroxide. In addition, in the table, "pH", "Temperature", and "Oxidation reduction potential (ORP)" indicate values at each point in time; "Cumulative addition amount" (sulfuric acid, hydrogen peroxide, NaSH, and NaOH) indicates the total addition amount at each point in time; and "Concentration" indicates a metal concentration at each point in time.

Each specimen was as follows.

Example 4A1: 288 mL of a sulfuric acid solution containing 73 mL of sulfuric acid having a concentration of 47 wt% was added to the electrode material (in a non-dried state) so that the pH was 2.0 or less, and stirred.

Example 4A2: After the procedure of Example 4A1, a change over time from the start of addition of 30 wt% hydrogen peroxide was confirmed, and 25 mL of a hydrogen peroxide solution having a concentration of 30 wt% and 10 mL of a sulfuric acid solution having a concentration of 47 wt% were added thereto over 71 minutes.

Example 4A3: After the procedure of Example 4A2, a sodium hydrosulfide solution having a concentration of 200 g/L was added thereto until the ORP was 0 mV or less.

Example 4A4: After the procedure of Example 4A3, 162 mL of the washing discharge liquid having a pH of 10.9 was added thereto, and the mixture was stirred for neutralization.

Example 4A5: After the procedure of Example 4A4, a sodium hydroxide solution having a concentration of 25 wt% was added to the leachate for neutralization, and the pH was stabilized at 3.0 to 4.0;
Thereafter, carbon of the anode material of the discarded LIB, which was insoluble in the sulfuric acid leaching, and the produced residue (copper sulfide) were subjected to a solid-liquid separation by filtration; and thereby, 490 mL of an eluate was obtained. The composition of 33.06 g of the residue (copper sulfide) is shown in Table 24.

[Table 23]

| Experimental Example | Time (min) | pH | T-pH (°C) | ORP (mV) | Cumulative addition amount (mL) | | | | Liquid amount (mL) | Concentration (g/L) | | | | | |
|---|---|---|---|---|---|---|---|---|---|---|---|---|---|---|---|
| | | | | | $H_2SO_4$ | $H_2O_2$ | NaSH | NaOH | | Ni | Co | Mn | Li | Al | Cu |
| 4A1 | 0 | 1.77 | 49.0 | 169 | 73 | 0 | 0 | 0 | 288 | 21.56 | 24.04 | 20.14 | 6.36 | 3.30 | 0.10 |
| 4A2 | 71 | 1.78 | 49.5 | 349 | 83 | 25 | 0 | 0 | 323 | 22.01 | 24.77 | 20.44 | 6.79 | 3.83 | 3.30 |
| 4A3 | 82 | 1.76 | 43.5 | -8 | 83 | 25 | 13.8 | 0 | 337 | 20.77 | 22.98 | 19.73 | 6.57 | 3.69 | 0.00 |
| 4A4 | 90 | 2.86 | 36.1 | 32 | 83 | 25 | 13.8 | 0 | 499 | 13.65 | 15.11 | 12.97 | 5.27 | 2.24 | 0.00 |
| 4A5 | 112 | 3.25 | 31.7 | 99 | 83 | 25 | 13.8 | 1 | 500 | 13.94 | 15.43 | 13.26 | 5.38 | 2.33 | 0.00 |

[Table 24]

| Amount (wt%) | | | | |
|---|---|---|---|---|
| Ni | Co | Mn | Al | Cu |
| 1.08 | 1.49 | 0.28 | 3.67 | 4.60 |

In a case where the amounts of cobalt and nickel in the electrode material taken out from the discarded LIB were 100%, the leaching rate was calculated to be 92% for the cobalt and 94% for the nickel, so that the cobalt and the nickel were sufficiently leached from the active material. In addition, it was found that, by performing the washing with water, the amount of sulfuric acid required for the leaching can be reduced, and by adding the washing waste liquid in the neutralization, the amount of sodium hydroxide solution can be reduced.

Next, a sodium hydroxide solution having a concentration of 25 wt% and a sodium hydrogen sulfide aqueous solution having a concentration of 200 g/L were added to the above-described eluate until the ORP was -400 mV (vs Ag/AgCl) or less while the mixture was stirred in a state where the pH was in a range of 2.0 to 3.5.

Then, after confirming that black precipitate substance (cobalt sulfide and nickel sulfide) was sufficiently generated, a solid-liquid separation was performed to recover the precipitate substance (cobalt and nickel separating step). On the other hand, impurities such as manganese, aluminum, iron, lithium, and calcium remained in the residual liquid, and thus were disposed of as a metal-containing waste liquid.

The precipitate substance was added to a re-dissolution liquid containing 100 mL of a sulfuric acid solution having a concentration of 1.5 mol/L and 20 mL of hydrogen peroxide water having a concentration of 30 wt%, and the mixture was heated to a liquid temperature of 60°C and stirred for 1 hour (re-dissolution step). Thereafter, the mixture was cooled to room temperature, and an undissolved fraction and elemental sulfur generated in the reaction of the pre-step were removed by filtration.

From the cobalt and nickel solution obtained in this way, a cobalt sulfate solution and a nickel sulfate solution were separated and recovered with a mixer-settler using an extractant solution obtained by mixing 20 vol% of PC88A (manufactured by DAIHACHI CHEMICAL INDUSTRY Co., Ltd.) as a metal extractant and 80 vol% of kerosene (solvent extracting step).

According to the above procedure of Invention Example, the amount of the obtained cobalt was 90% and the amount of the obtained nickel was 92% in terms of yield in the back extraction in a case where the amounts of cobalt and nickel in the electrode material taken out from the discarded LIB were 100%. Therefore, with the method for separating cobalt and nickel according to the present embodiment, it was found that cobalt and nickel could be recovered from the discarded LIB with a high yield.

The metal concentration was measured by ICP-AES, the pH was measured with a pH meter, and the ORP was measured with an ORP meter. The numerical value of % was based on mass.

(Procedure 1 of Comparative Examples)

Table 25 shows leaching test results in which the amount of sulfuric acid was the same as in Examples described above, using the unwashed electrode material.

"Time (min)" in Table 25 indicates an elapsed time from the start of the addition of hydrogen peroxide. In addition, in Table 25, "pH", "Temperature", and "ORP" indicate values at each point in time; "Cumulative addition amount" (sulfuric acid, hydrogen peroxide, NaSH, and NaOH) indicates the total addition amount at each point in time; and "Concentration" indicates a metal concentration at each point in time.

Each specimen was as follows.

Comparative Example 4B1: 500 mL of a sulfuric acid solution containing 85 mL of sulfuric acid having a concentration of 47 wt% was added to 72.5 g of an electrode material taken out from a discarded LIB, and the mixture was stirred.

Comparative Example 4B2: After the procedure of Comparative Example 4B1, with confirming a change over time from the start of addition of a hydrogen peroxide solution having a concentration of 30 wt%, 25 mL of the hydrogen peroxide solution having a concentration of 30 wt% was added thereto over 71 minutes.

Comparative Example 4B3: After the procedure of Comparative Example 4B2, a sodium hydrosulfide solution having a concentration of 200 g/L was added thereto until the ORP was 0 mV or less.

Comparative Example 4B4: After the procedure of Comparative Example 4B3, a sodium hydroxide solution having a concentration of 25 wt% was added to the leachate, and the pH was stabilized at 3.0 to 4.0;

After the procedure of Comparative Example 4B4, carbon of the anode material of the discarded LIB, which was insoluble in the sulfuric acid leaching, and the produced residue (copper sulfide) were subjected to a solid-liquid separation by filtration; and thereby, 410 mL of an eluate was obtained.

The composition of 37.17 g of the residue (copper sulfide) is shown in Table 26.

[Table 25]

| Comparative Example | Time (min) | pH | T-pH (°C) | ORP (mV) | Cumulative addition amount (mL) | | | | Concentration (g/L) | | | | | |
|---|---|---|---|---|---|---|---|---|---|---|---|---|---|---|
| | | | | | $H_2SO_4$ | $H_2O_2$ | NaSH | NaOH | Ni | Co | Mn | Li | Al | Cu |
| 4B1 | 0 | 1.9 | 59.2 | 334 | 85 | 0 | 0 | 0 | 14.02 | 15.72 | 13.24 | 5.71 | 2.77 | 0.59 |
| 4B2 | 67 | 2.43 | 58.0 | 497 | 85 | 25 | 0 | 0 | 14.13 | 15.82 | 13.23 | 5.65 | 2.76 | 2.41 |
| 4B3 | 78 | 2.09 | 51.7 | -2 | 85 | 25 | 19.3 | 0 | 13.07 | 14.24 | 12.81 | 5.26 | 2.25 | 0.00 |
| 4B4 | 130 | 3.25 | 33.7 | 153 | 85 | 25 | 19.3 | 5 | 13.36 | 14.54 | 13.07 | 5.32 | 1.95 | 0.00 |

[Table 26]

| Amount (wt%) | | | | |
|---|---|---|---|---|
| Ni | Co | Mn | Al | Cu |
| 1.66 | 2.34 | 0.57 | 3.60 | 4.13 |

In Comparative Example (procedure 1), in a case where the amounts of cobalt and nickel in the electrode material taken out from the discarded LIB were 100%, the leaching rate was calculated to be 86% for the cobalt and 90% for the nickel.

From Comparative Examples 4B1 and 4B2, in a case where the washing step was not performed, the sulfuric acid was consumed to some extent for the neutralization, and the pH was 2.0 or more at the stage in which the addition of hydrogen peroxide was finished. Since the leaching was conducted in a state where the pH was 2.0 or more, cobalt and nickel were not sufficiently dissolved by the leaching, and the leaching rate was lowered. It was found that the method according to the embodiment of the present invention was effective for sufficiently performing the leaching while reducing the used amount of sulfuric acid or sodium hydroxide solution.

(Procedure 2 of Comparative Examples)

Table 27 shows leaching test results in which the pH in the leaching was 2.0 or less, using the unwashed electrode material. "Time (min)" in Table 27 indicates an elapsed time from the start of the addition of hydrogen peroxide. In addition, in Table 27, "pH", "Temperature", and "ORP" indicate values at each point in time; "Cumulative addition amount" (sulfuric acid, hydrogen peroxide, NaSH, and NaOH) indicates the total addition amount at each point in time; and "Concentration" indicates a metal concentration at each point in time.

Each specimen was as follows.

Comparative Example 4C1: 85 mL of a sulfuric acid having a concentration of 47 wt% was added to 72.5 g of an electrode material taken out from a discarded LIB, and the mixture was kneaded for 15 minutes; and 415 mL of distilled water was added thereto, and the mixture was stirred.

Comparative Example 4C2: After the procedure of Comparative Example 4C1, with confirming a change over time from the start of addition of a hydrogen peroxide solution having a concentration of 30 wt%, 25 mL of the hydrogen peroxide solution having a concentration of 30 wt% was added thereto over 75 minutes while maintaining the pH at 2.0 or less using a sulfuric acid solution having a concentration of 47 wt%.

Comparative Example 4C3: After the procedure of Comparative Example 4C2, a sodium hydrosulfide solution having a concentration of 200 g/L was added thereto until the ORP was 0 mV or less.

Comparative Example 4C4: After the procedure of Comparative Example 4C3, a sodium hydroxide solution having a concentration of 25 wt% was added to the leachate, and the pH was stabilized at 3.0 to 4.0;
After the procedure of Comparative Example 4C4, carbon of the anode material of the discarded LIB, which was insoluble in the sulfuric acid leaching, and the produced residue (copper sulfide) were subjected to a solid-liquid separation by filtration; and thereby, 410 mL of an eluate was obtained.

The composition of 37.17 g of the residue (copper sulfide) is shown in Table 28.

[Table 27]

| Experimental Example | Time (min) | pH | Temperature (°C) | ORP (mV) | Cumulative addition amount (mL) | | | | Concentration (g/L) | | | | | |
|---|---|---|---|---|---|---|---|---|---|---|---|---|---|---|
| | | | | | $H_2SO_4$ | $H_2O_2$ | NaSH | NaOH | Ni | Co | Mn | Li | Al | Cu |
| 4C1 | 0 | 2.07 | 50.1 | 339 | 85 | 0 | 0 | 0 | 13.51 | 15.14 | 12.82 | 5.70 | 2.62 | 0.31 |
| 4C2 | 75 | 1.82 | 49.7 | 522 | 100 | 25 | 0 | 0 | 13.28 | 14.91 | 12.53 | 5.91 | 2.80 | 2.36 |
| 4C3 | 95 | 1.79 | 44.5 | -2 | 100 | 25 | 14.9 | 0 | 12.78 | 14.16 | 12.25 | 5.75 | 2.74 | 0.00 |
| 4C4 | 123 | 3.43 | 39.4 | 235 | 100 | 25 | 14.9 | 38 | 12.20 | 13.49 | 11.61 | 5.14 | 1.25 | 0.00 |

[Table 28]

| Amount (wt%) | | | | |
|---|---|---|---|---|
| Ni | Co | Mn | Al | Cu |
| 0.72 | 0.95 | 0.21 | 4.93 | 3.90 |

In Comparative Example (procedure 2), in a case where the amounts of cobalt and nickel in the electrode material taken out from the discarded LIB were 100%, the leaching rate was calculated to be 95% for the cobalt and 95% for the nickel.

From Comparative Examples 4C1 and 4C2, in a case where the washing step was not performed, the sulfuric acid was consumed to some extent for the neutralization, and the amount of sulfuric acid required to maintain the pH at 2.0 or less until the addition of hydrogen peroxide was completed was in excess as compared to that in Examples. In Comparative Example 4C4, only sodium hydroxide was used to adjust the pH to be 3.0 to 4.0, and thus the amount of sodium hydroxide required for neutralization was larger than that in Examples. It was found that the method according to the embodiment of the present invention was effective for sufficiently performing the leaching while reducing the used amount of sulfuric acid or sodium hydroxide solution.

INDUSTRIAL APPLICABILITY

With the method for separating cobalt and nickel including the method for leaching an electrode material according to the present invention, it is possible to separate and recover particularly cobalt and nickel, among valuable metals contained in a used lithium ion secondary battery, from other metals accurately and at a low cost, whereby a recycled resource having high purity can be efficiently obtained from a lithium ion secondary battery. As a result, the present invention has industrial applicability.

**Claims**

**1.** A method for leaching an electrode material, in which the electrode material of a lithium ion secondary battery is subjected to acid leaching, the method comprising:

a leaching step of reacting the electrode material of the lithium ion secondary battery with sulfuric acid to obtain a leachate in which metals contained in the electrode material are leached;
wherein the leaching step includes a sulfuric acid adding step of adding the sulfuric acid to the electrode material to obtain a sulfuric acid-added electrode material, a kneading step of kneading the sulfuric acid-added electrode material to form a leaching paste, and a diluting step of diluting the leaching paste with water.

**2.** The method for leaching an electrode material according to Claim 1,
wherein the leaching step further includes a step of adding an antifoaming agent containing a saturated aliphatic alcohol having 8 or less carbon atoms, to the electrode material, the sulfuric acid-added electrode material, the leaching paste, or the leachate.

**3.** The method for leaching an electrode material according to Claim 1,

wherein the leaching step further includes an iron powder adding step of adding iron powder to the leachate, and an ORP measuring step of measuring an oxidation reduction potential after the addition of the iron powder to specify a stable oxidation reduction potential which is an oxidation reduction potential at a point in time when an increase in oxidation reduction potential is not observed, and
the iron powder adding step and the ORP measuring step are repeated until the stable oxidation reduction potential is equal to or less than a predetermined value.

**4.** The method for leaching an electrode material according to any one of Claims 1 to 3,
wherein, when a mass (g) of the electrode material is denoted as EA, a volume (mL) of the sulfuric acid is denoted as SV, and a concentration (mol/L) of the sulfuric acid is denoted as SC, the kneading in the kneading step is performed to satisfy $1 \leq (SV/EA) \leq 2$ and $5.5\ EA \leq (SC \times SV)$ <_ 10.3 EA.

**5.** The method for leaching an electrode material according to any one of Claims 1 to 4,

wherein, in at least one of the kneading step and the diluting step, hydrogen peroxide is further added.

**6.** The method for leaching an electrode material according to any one of Claims 1 to 5, wherein, in the diluting step, hydrogen peroxide is added after a liquid temperature after the dilution is adjusted to be in a range of 50°C or higher and 60°C or lower and a pH is adjusted to be 2.0 or less.

**7.** The method for leaching an electrode material according to any one of Claims 1 to 6, wherein the diluting step further includes a step of further adding sulfuric acid to adjust a pH of the diluted leachate to be 2.0 or less.

**8.** The method for leaching an electrode material according to any one of Claims 2 to 7, wherein, in at least one of the kneading step and the diluting step, an alcohol is further added.

**9.** The method for leaching an electrode material according to Claim 2, wherein the alcohol has 4 or more and 7 or less carbon atoms.

**10.** The method for leaching an electrode material according to Claim 2 or 9, wherein, in the leaching step, the antifoaming agent is added after adding the sulfuric acid to the electrode material.

**11.** The method for leaching an electrode material according to any one of Claims 2, 9, and 10, wherein, in the leaching step, hydrogen peroxide is further added after a liquid temperature is adjusted to be in a range of 50°C or higher and 60°C or lower.

**12.** The method for leaching an electrode material according to Claim 11, wherein, in the leaching step, the antifoaming agent is added after adding the hydrogen peroxide.

**13.** The method for leaching an electrode material according to any one of Claims 2 and 9 to 12 wherein the leaching step is a step including the kneading step of kneading the sulfuric acid and the electrode material to form the leaching paste, and the diluting step of adding water to the leaching paste to dilute the leaching paste.

**14.** The method for leaching an electrode material according to Claim 3, wherein the predetermined value of the stable oxidation reduction potential is 400 mV.

**15.** The method for leaching an electrode material according to Claim 3 or 14, wherein the iron powder adding step and the ORP measuring step are performed with a liquid temperature in a range of 50°C or higher and 70°C or lower.

**16.** The method for leaching an electrode material according to any one of Claims 3, 14, and 15, wherein the iron powder added in the iron powder adding step is iron powder having an average particle size value (D50) of 1 mm or less.

**17.** The method for leaching an electrode material according to any one of Claims 3 and 14 to 16, wherein, in the sulfuric acid adding step, a pH is adjusted to be in a range of 1.5 or more and 2.0 or less.

**18.** A method for separating cobalt and nickel, in which cobalt and nickel are separated from a lithium ion secondary battery, the method comprising:

a crushing and sorting step of crushing and classifying the lithium ion secondary battery to obtain an electrode material containing at least cobalt, nickel, copper, and lithium;
a leaching step of producing a leachate by the method for leaching an electrode material according to any one of Claims 1 to 17;
a copper precipitating step of adding a hydrogen sulfide compound to the leachate and stirring a mixture to precipitate the copper as copper sulfide;
either one of a first treatment step which includes, in the following order, a first neutralizing step of adding an alkali metal hydroxide to a mixed solution containing the precipitate obtained in the copper precipitating step to adjust a pH and obtain a first neutralized solution, and a first filtering step of subjecting the first neutralized solution to a solid-liquid separation to obtain a first eluate containing the cobalt and the nickel, and a residue containing the copper sulfide, or

a second treatment step which includes, in the following order, a second filtering step of subjecting a mixed solution containing the precipitate obtained in the copper precipitating step to a solid-liquid separation to obtain a second eluate containing the cobalt and the nickel, and a residue containing the copper sulfide, and a second neutralizing step of adding an alkali metal hydroxide to the second eluate to adjust a pH and obtain a second neutralized solution; and
a cobalt and nickel separating step of adding a hydrogen sulfide compound to the first eluate obtained in the first treatment step or to the second neutralized solution obtained in the second treatment step, stirring a mixture, and subjecting the mixture to a solid-liquid separation to obtain a precipitate substance containing cobalt sulfide and nickel sulfide, and a residual liquid containing the lithium.

**19.** The method for separating cobalt and nickel according to Claim 18, further comprising:
an iron separating step of adding a hypochlorite compound to either one of the first eluate obtained in the first treatment step, the second neutralized solution obtained in the second treatment step, or a re-dissolution liquid obtained by dissolving the precipitate substance obtained in the cobalt and nickel separating step to separate a precipitate substance containing iron.

**20.** The method for separating cobalt and nickel according to Claim 18 or 19, further comprising, after the crushing and sorting step and before the leaching step:

a washing step of washing the electrode material with water and recovering an alkaline washing discharge liquid after the washing of the electrode material,
wherein, in the first neutralizing step, the washing discharge liquid is further added to the mixed solution, and in the second neutralizing step, the washing discharged liquid is further added to the second eluate.

**21.** The method for separating cobalt and nickel according to any one of Claims 18 to 20,
wherein the first treatment step is performed as a subsequent step of the copper precipitating step.

**22.** The method for separating cobalt and nickel according to any one of Claims 18 to 21, further comprising, as a pre-step of the crushing and sorting step:
a heat treatment step of heating the lithium ion secondary battery to carry out a heat treatment.

**23.** The method for separating cobalt and nickel according to any one of Claims 19 to 22,
wherein, in the iron separating step, the precipitate substance containing iron is separated from the re-dissolution liquid.

**24.** The method for separating cobalt and nickel according to any one of Claims 19 to 23,
wherein, in the iron separating step, when the hypochlorite compound is added to the re-dissolution liquid, an addition end point of the hypochlorite compound is determined by the following expression 1 which shows a relationship between an oxidation reduction potential (ORP) and a pH,

$$ORP = -153.18 \times pH + 1577.2 \pm 30\ (mV) \ldots (1).$$

**25.** The method for separating cobalt and nickel according to any one of Claims 20 to 24,
wherein the washing discharge liquid has a pH of 9 or more.

**26.** The method for separating cobalt and nickel according to any one of Claims 20 to 25,
wherein the washing step is a step of putting the electrode material in water and stirring a mixture in a range of 0.33 hours or more and 6 hours or less.

**27.** The method for separating cobalt and nickel according to any one of Claims 20 to 26,
wherein an antifoaming agent containing a saturated aliphatic alcohol having 8 or less carbon atoms is further added in a treatment liquid used in the leaching step.

**28.** The method for separating cobalt and nickel according to any one of Claims 20 to 27,
wherein the leaching step is a step including the kneading step of kneading the sulfuric acid and the electrode material washed in the washing step to form the leaching paste, and the diluting step of adding water to the leaching paste to dilute the leaching paste.

**29.** The method for separating cobalt and nickel according to any one of Claims 20 to 28, further comprising:

a re-dissolution step of adding a re-dissolution liquid containing sulfuric acid to the precipitate substance separated in the cobalt and nickel separating step, stirring a mixture, and then subjecting the mixture to a solid-liquid separation to obtain a cobalt and nickel solution containing the cobalt and the nickel; and
a solvent extracting step of adding an extractant solution to the cobalt and nickel solution to obtain a cobalt extract and a nickel extract.

FIG. 1

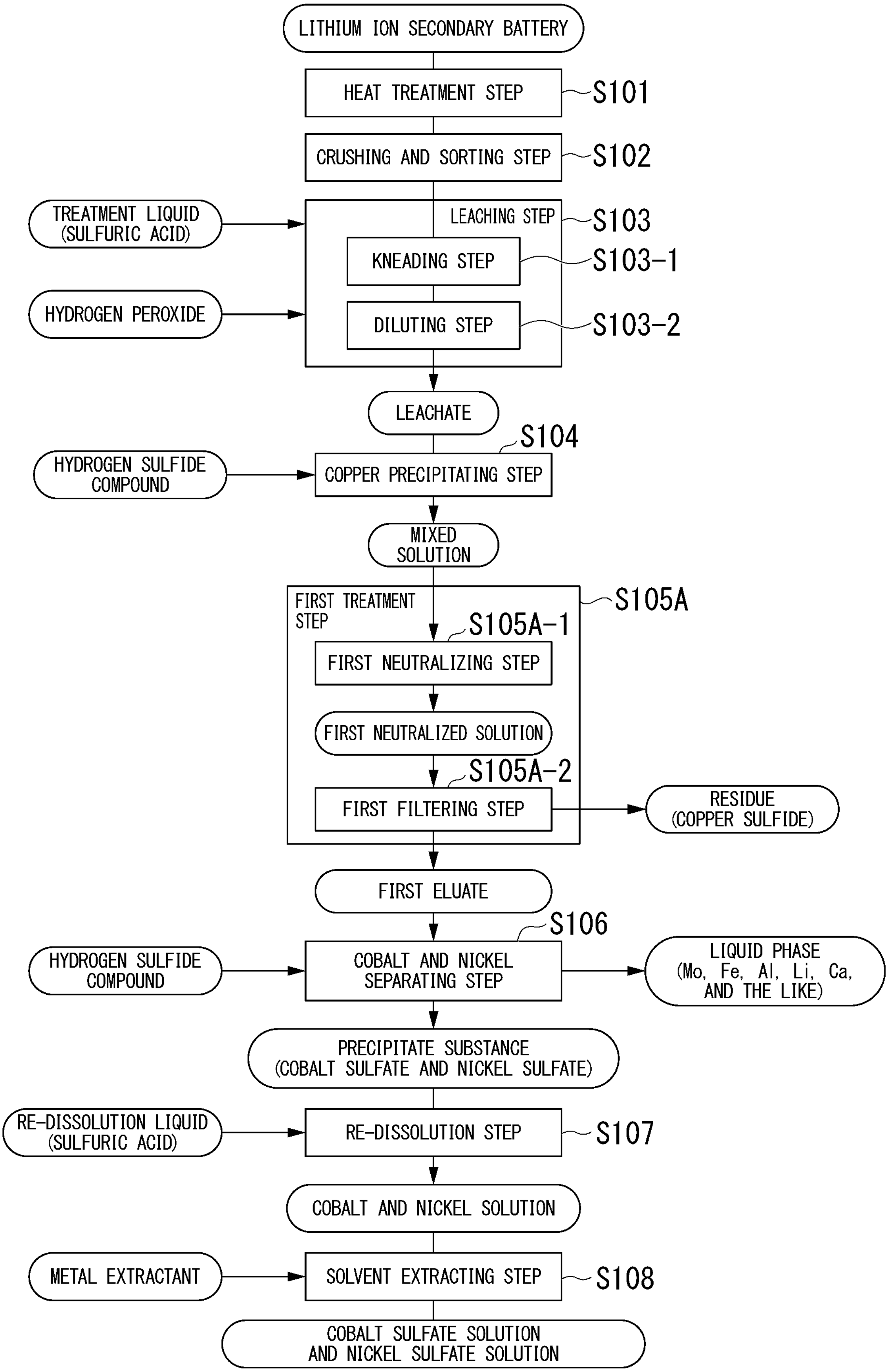
LITHIUM ION SECONDARY BATTERY
HEAT TREATMENT STEP
S101
CRUSHING AND SORTING STEP
S102
TREATMENT LIQUID (SULFURIC ACID)
LEACHING STEP
S103
KNEADING STEP
S103-1
HYDROGEN PEROXIDE
DILUTING STEP
S103-2
LEACHATE
S104
HYDROGEN SULFIDE COMPOUND
COPPER PRECIPITATING STEP
MIXED SOLUTION
FIRST TREATMENT STEP
S105A
S105A-1
FIRST NEUTRALIZING STEP
FIRST NEUTRALIZED SOLUTION
S105A-2
FIRST FILTERING STEP
RESIDUE (COPPER SULFIDE)
FIRST ELUATE
S106
HYDROGEN SULFIDE COMPOUND
COBALT AND NICKEL SEPARATING STEP
LIQUID PHASE (Mo, Fe, Al, Li, Ca, AND THE LIKE)
PRECIPITATE SUBSTANCE (COBALT SULFATE AND NICKEL SULFATE)
RE-DISSOLUTION LIQUID (SULFURIC ACID)
RE-DISSOLUTION STEP
S107
COBALT AND NICKEL SOLUTION
METAL EXTRACTANT
SOLVENT EXTRACTING STEP
S108
COBALT SULFATE SOLUTION AND NICKEL SULFATE SOLUTION

FIG. 2

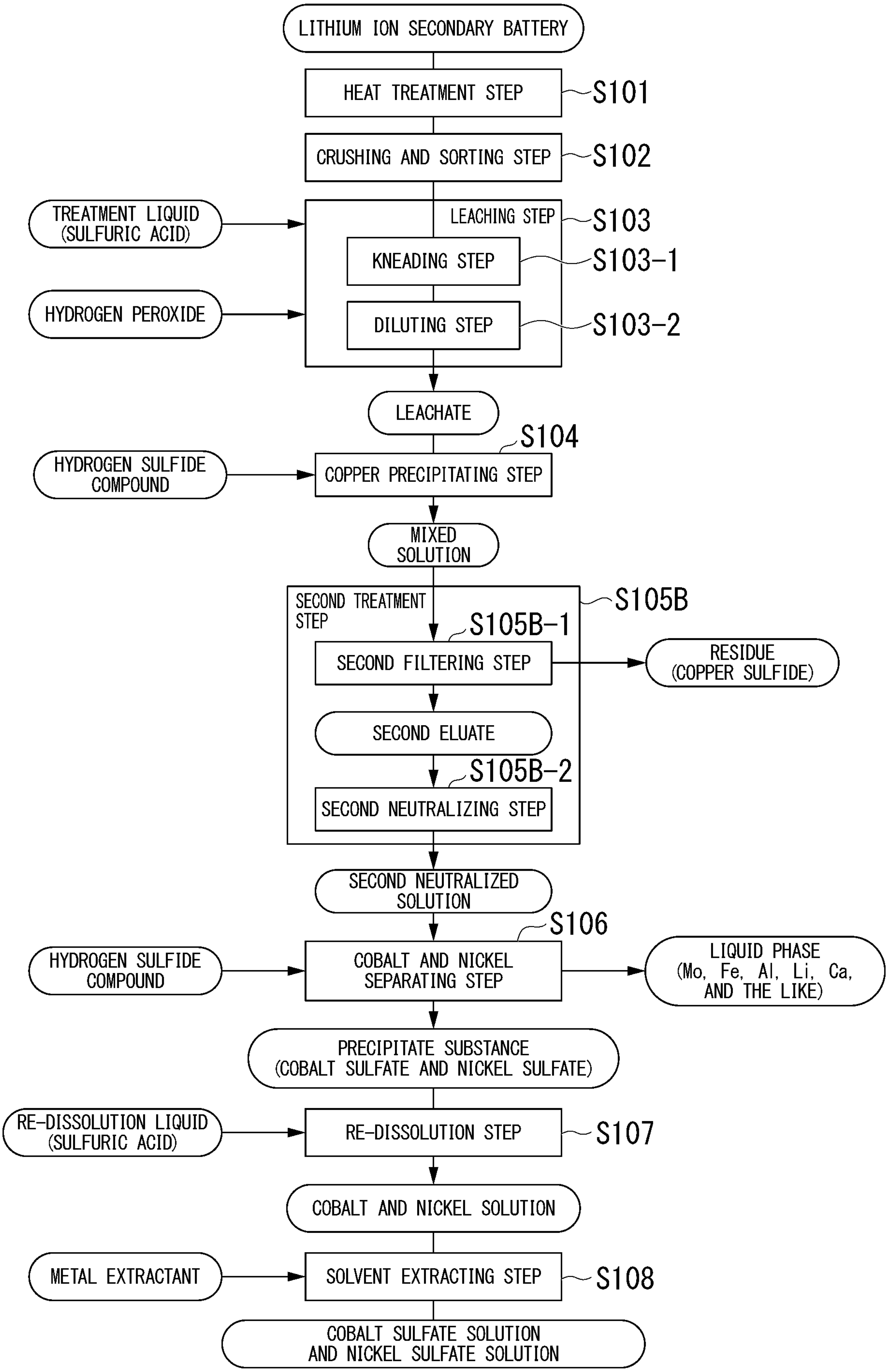
LITHIUM ION SECONDARY BATTERY
HEAT TREATMENT STEP
S101
CRUSHING AND SORTING STEP
S102
TREATMENT LIQUID (SULFURIC ACID)
LEACHING STEP
S103
KNEADING STEP
S103-1
HYDROGEN PEROXIDE
DILUTING STEP
S103-2
LEACHATE
S104
HYDROGEN SULFIDE COMPOUND
COPPER PRECIPITATING STEP
MIXED SOLUTION
SECOND TREATMENT STEP
S105B
S105B-1
SECOND FILTERING STEP
RESIDUE (COPPER SULFIDE)
SECOND ELUATE
S105B-2
SECOND NEUTRALIZING STEP
SECOND NEUTRALIZED SOLUTION
S106
HYDROGEN SULFIDE COMPOUND
COBALT AND NICKEL SEPARATING STEP
LIQUID PHASE (Mo, Fe, Al, Li, Ca, AND THE LIKE)
PRECIPITATE SUBSTANCE (COBALT SULFATE AND NICKEL SULFATE)
RE-DISSOLUTION LIQUID (SULFURIC ACID)
RE-DISSOLUTION STEP
S107
COBALT AND NICKEL SOLUTION
METAL EXTRACTANT
SOLVENT EXTRACTING STEP
S108
COBALT SULFATE SOLUTION AND NICKEL SULFATE SOLUTION

FIG. 3

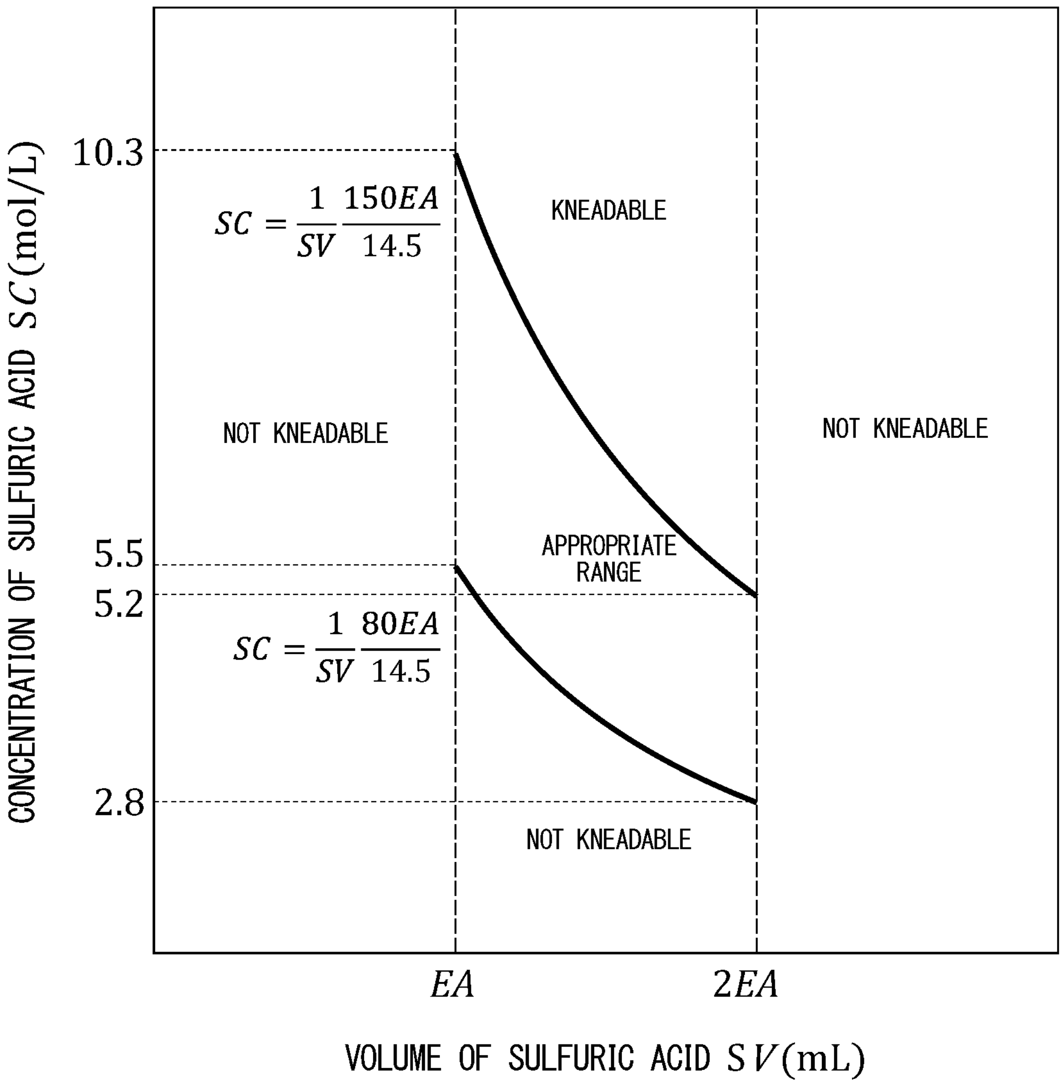
CONCENTRATION OF SULFURIC ACID $SC$(mol/L)
10.3
5.5
5.2
2.8
$SC = \frac{1}{SV}\frac{150EA}{14.5}$
$SC = \frac{1}{SV}\frac{80EA}{14.5}$
KNEADABLE
NOT KNEADABLE
APPROPRIATE RANGE
NOT KNEADABLE
NOT KNEADABLE
$EA$
$2EA$
VOLUME OF SULFURIC ACID $SV$(mL)

FIG. 4

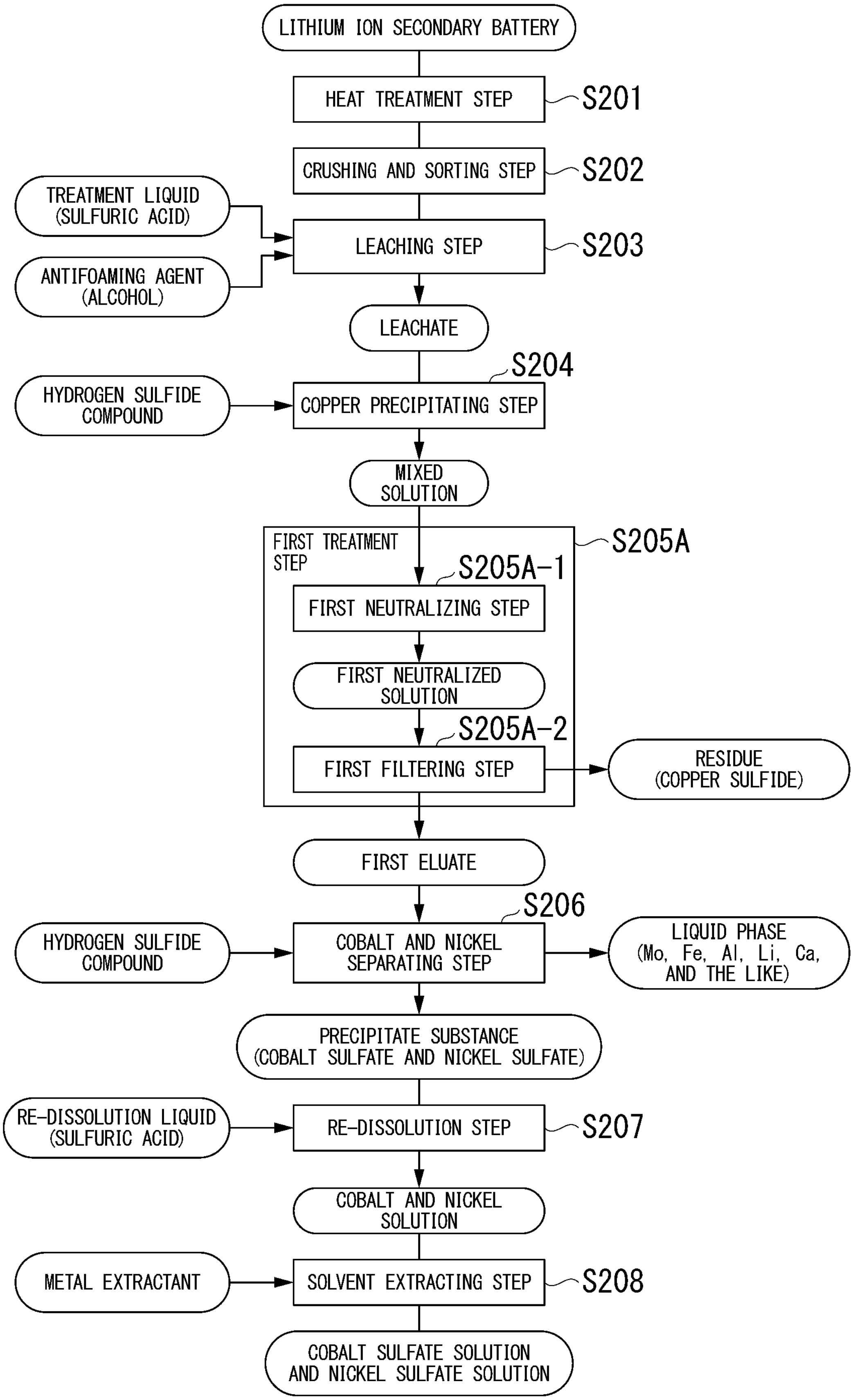
LITHIUM ION SECONDARY BATTERY
HEAT TREATMENT STEP
S201
CRUSHING AND SORTING STEP
S202
TREATMENT LIQUID (SULFURIC ACID)
ANTIFOAMING AGENT (ALCOHOL)
LEACHING STEP
S203
LEACHATE
S204
HYDROGEN SULFIDE COMPOUND
COPPER PRECIPITATING STEP
MIXED SOLUTION
FIRST TREATMENT STEP
S205A
S205A-1
FIRST NEUTRALIZING STEP
FIRST NEUTRALIZED SOLUTION
S205A-2
FIRST FILTERING STEP
RESIDUE (COPPER SULFIDE)
FIRST ELUATE
S206
HYDROGEN SULFIDE COMPOUND
COBALT AND NICKEL SEPARATING STEP
LIQUID PHASE (Mo, Fe, Al, Li, Ca, AND THE LIKE)
PRECIPITATE SUBSTANCE (COBALT SULFATE AND NICKEL SULFATE)
RE-DISSOLUTION LIQUID (SULFURIC ACID)
RE-DISSOLUTION STEP
S207
COBALT AND NICKEL SOLUTION
METAL EXTRACTANT
SOLVENT EXTRACTING STEP
S208
COBALT SULFATE SOLUTION AND NICKEL SULFATE SOLUTION

FIG. 5

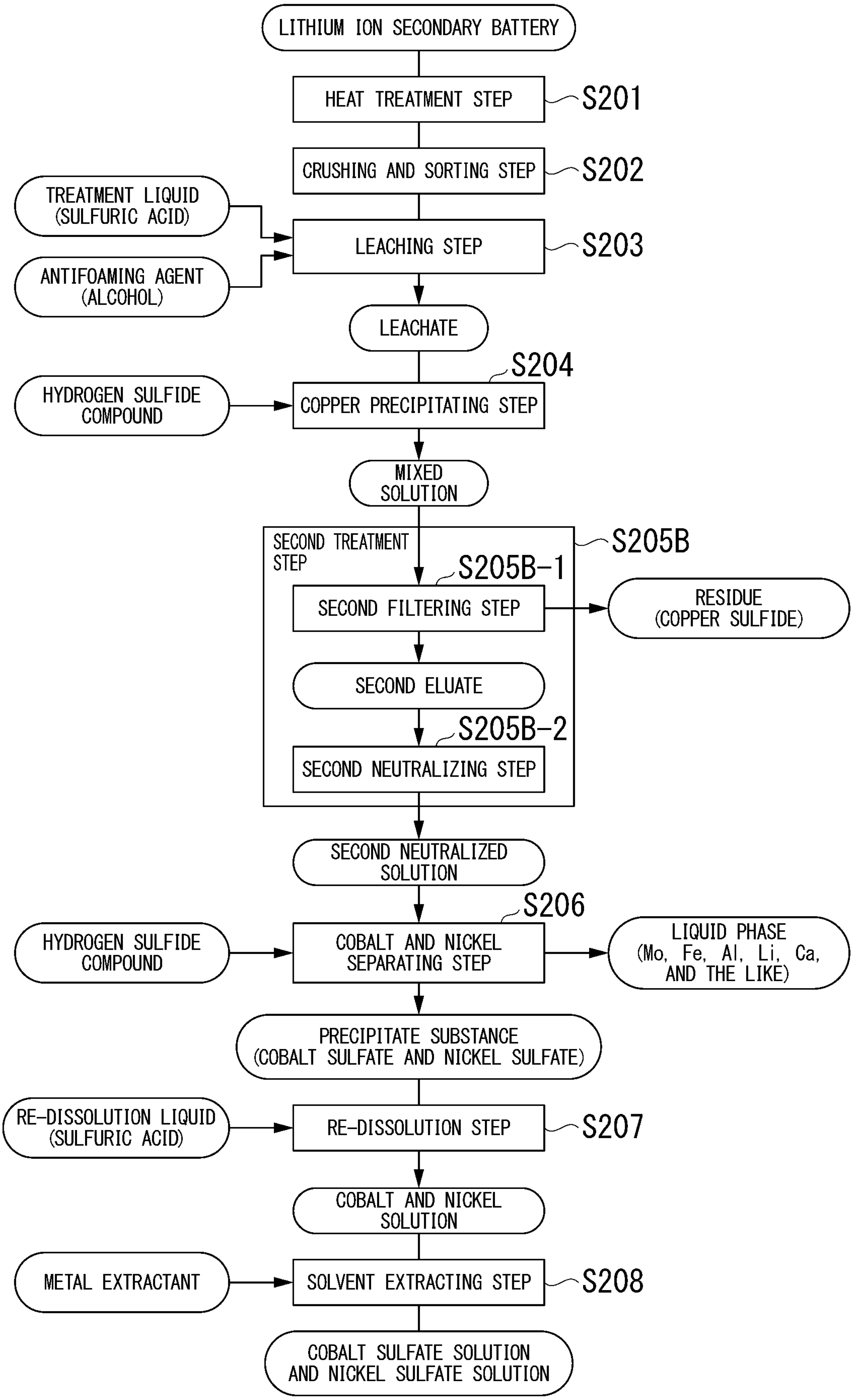
LITHIUM ION SECONDARY BATTERY
HEAT TREATMENT STEP
S201
CRUSHING AND SORTING STEP
S202
TREATMENT LIQUID (SULFURIC ACID)
ANTIFOAMING AGENT (ALCOHOL)
LEACHING STEP
S203
LEACHATE
S204
HYDROGEN SULFIDE COMPOUND
COPPER PRECIPITATING STEP
MIXED SOLUTION
SECOND TREATMENT STEP
S205B
S205B-1
SECOND FILTERING STEP
RESIDUE (COPPER SULFIDE)
SECOND ELUATE
S205B-2
SECOND NEUTRALIZING STEP
SECOND NEUTRALIZED SOLUTION
S206
HYDROGEN SULFIDE COMPOUND
COBALT AND NICKEL SEPARATING STEP
LIQUID PHASE (Mo, Fe, Al, Li, Ca, AND THE LIKE)
PRECIPITATE SUBSTANCE (COBALT SULFATE AND NICKEL SULFATE)
RE-DISSOLUTION LIQUID (SULFURIC ACID)
RE-DISSOLUTION STEP
S207
COBALT AND NICKEL SOLUTION
METAL EXTRACTANT
SOLVENT EXTRACTING STEP
S208
COBALT SULFATE SOLUTION AND NICKEL SULFATE SOLUTION

FIG. 6

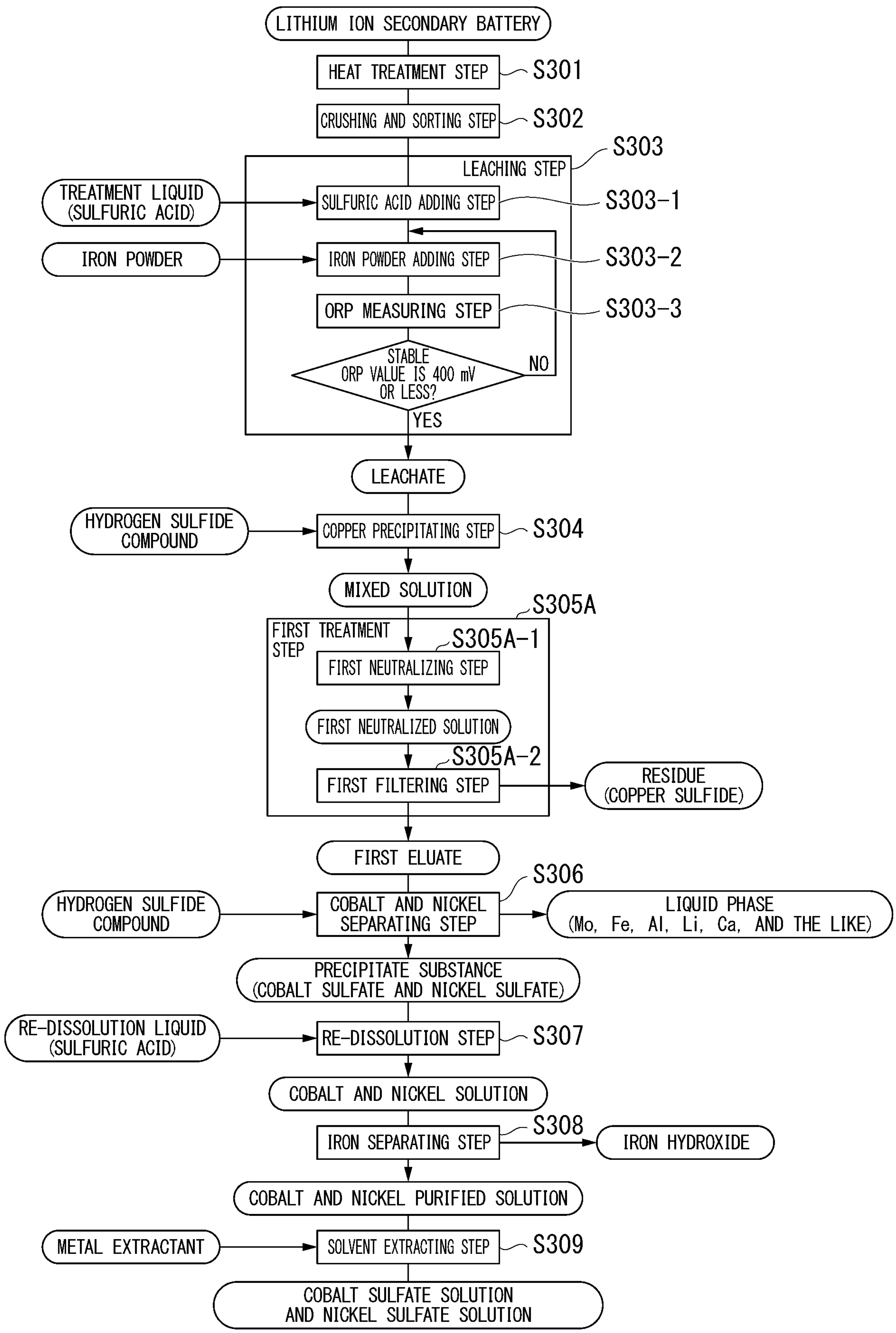
LITHIUM ION SECONDARY BATTERY
HEAT TREATMENT STEP
S301
CRUSHING AND SORTING STEP
S302
S303
LEACHING STEP
TREATMENT LIQUID (SULFURIC ACID)
SULFURIC ACID ADDING STEP
S303-1
IRON POWDER
IRON POWDER ADDING STEP
S303-2
ORP MEASURING STEP
S303-3
STABLE ORP VALUE IS 400 mV OR LESS?
NO
YES
LEACHATE
HYDROGEN SULFIDE COMPOUND
COPPER PRECIPITATING STEP
S304
MIXED SOLUTION
S305A
FIRST TREATMENT STEP
S305A-1
FIRST NEUTRALIZING STEP
FIRST NEUTRALIZED SOLUTION
S305A-2
FIRST FILTERING STEP
RESIDUE (COPPER SULFIDE)
FIRST ELUATE
S306
HYDROGEN SULFIDE COMPOUND
COBALT AND NICKEL SEPARATING STEP
LIQUID PHASE (Mo, Fe, Al, Li, Ca, AND THE LIKE)
PRECIPITATE SUBSTANCE (COBALT SULFATE AND NICKEL SULFATE)
RE-DISSOLUTION LIQUID (SULFURIC ACID)
RE-DISSOLUTION STEP
S307
COBALT AND NICKEL SOLUTION
IRON SEPARATING STEP
S308
IRON HYDROXIDE
COBALT AND NICKEL PURIFIED SOLUTION
METAL EXTRACTANT
SOLVENT EXTRACTING STEP
S309
COBALT SULFATE SOLUTION AND NICKEL SULFATE SOLUTION

FIG. 7

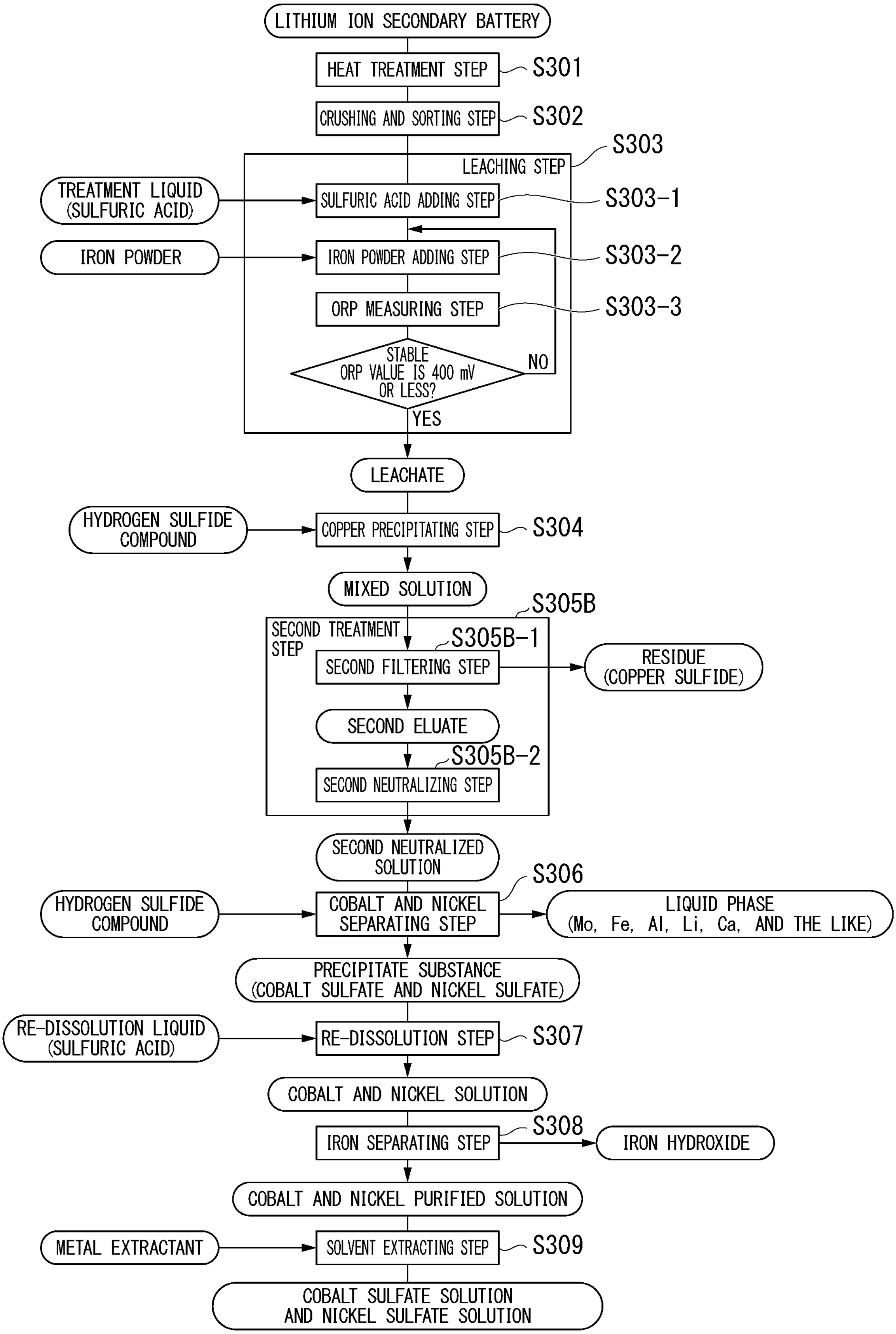
LITHIUM ION SECONDARY BATTERY
HEAT TREATMENT STEP
S301
CRUSHING AND SORTING STEP
S302
S303
LEACHING STEP
TREATMENT LIQUID (SULFURIC ACID)
SULFURIC ACID ADDING STEP
S303-1
IRON POWDER
IRON POWDER ADDING STEP
S303-2
ORP MEASURING STEP
S303-3
STABLE ORP VALUE IS 400 mV OR LESS?
NO
YES
LEACHATE
HYDROGEN SULFIDE COMPOUND
COPPER PRECIPITATING STEP
S304
MIXED SOLUTION
S305B
SECOND TREATMENT STEP
S305B-1
SECOND FILTERING STEP
RESIDUE (COPPER SULFIDE)
SECOND ELUATE
S305B-2
SECOND NEUTRALIZING STEP
SECOND NEUTRALIZED SOLUTION
S306
HYDROGEN SULFIDE COMPOUND
COBALT AND NICKEL SEPARATING STEP
LIQUID PHASE (Mo, Fe, Al, Li, Ca, AND THE LIKE)
PRECIPITATE SUBSTANCE (COBALT SULFATE AND NICKEL SULFATE)
RE-DISSOLUTION LIQUID (SULFURIC ACID)
RE-DISSOLUTION STEP
S307
COBALT AND NICKEL SOLUTION
S308
IRON SEPARATING STEP
IRON HYDROXIDE
COBALT AND NICKEL PURIFIED SOLUTION
METAL EXTRACTANT
SOLVENT EXTRACTING STEP
S309
COBALT SULFATE SOLUTION AND NICKEL SULFATE SOLUTION

FIG. 8A

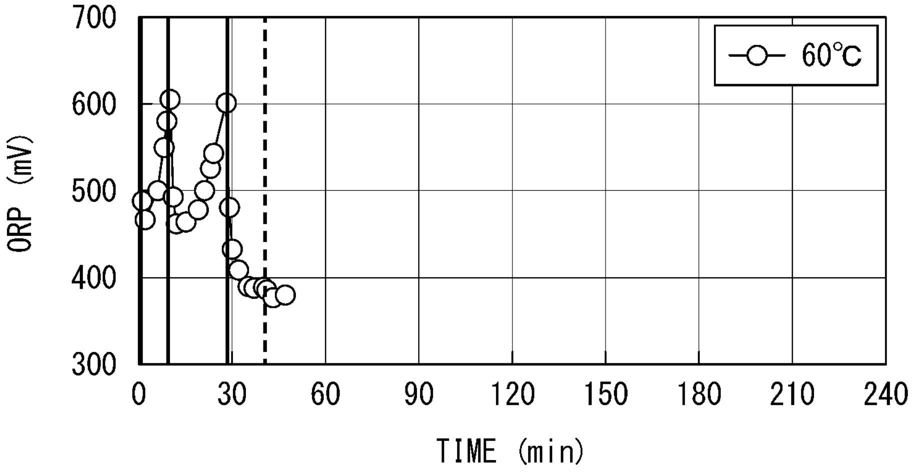


FIG. 8B

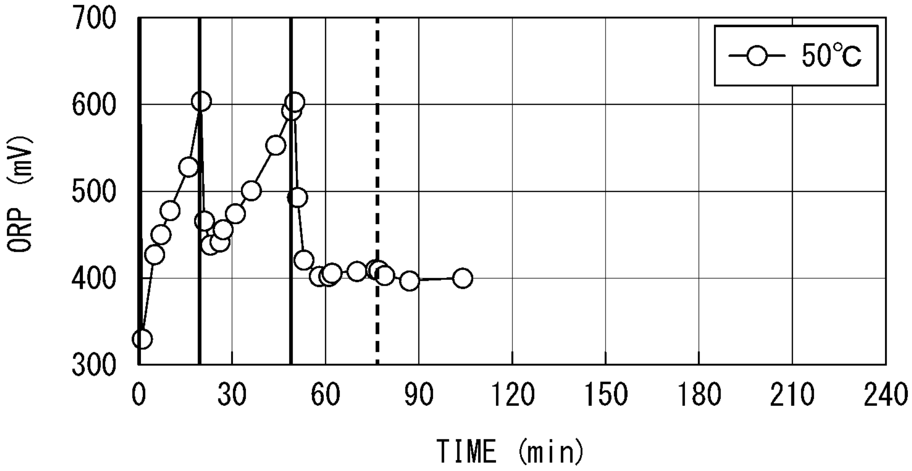


FIG. 8C

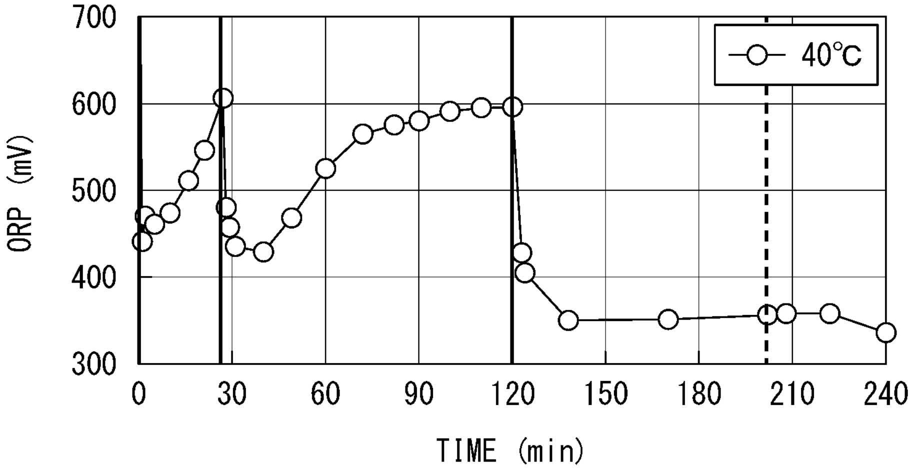

FIG. 9

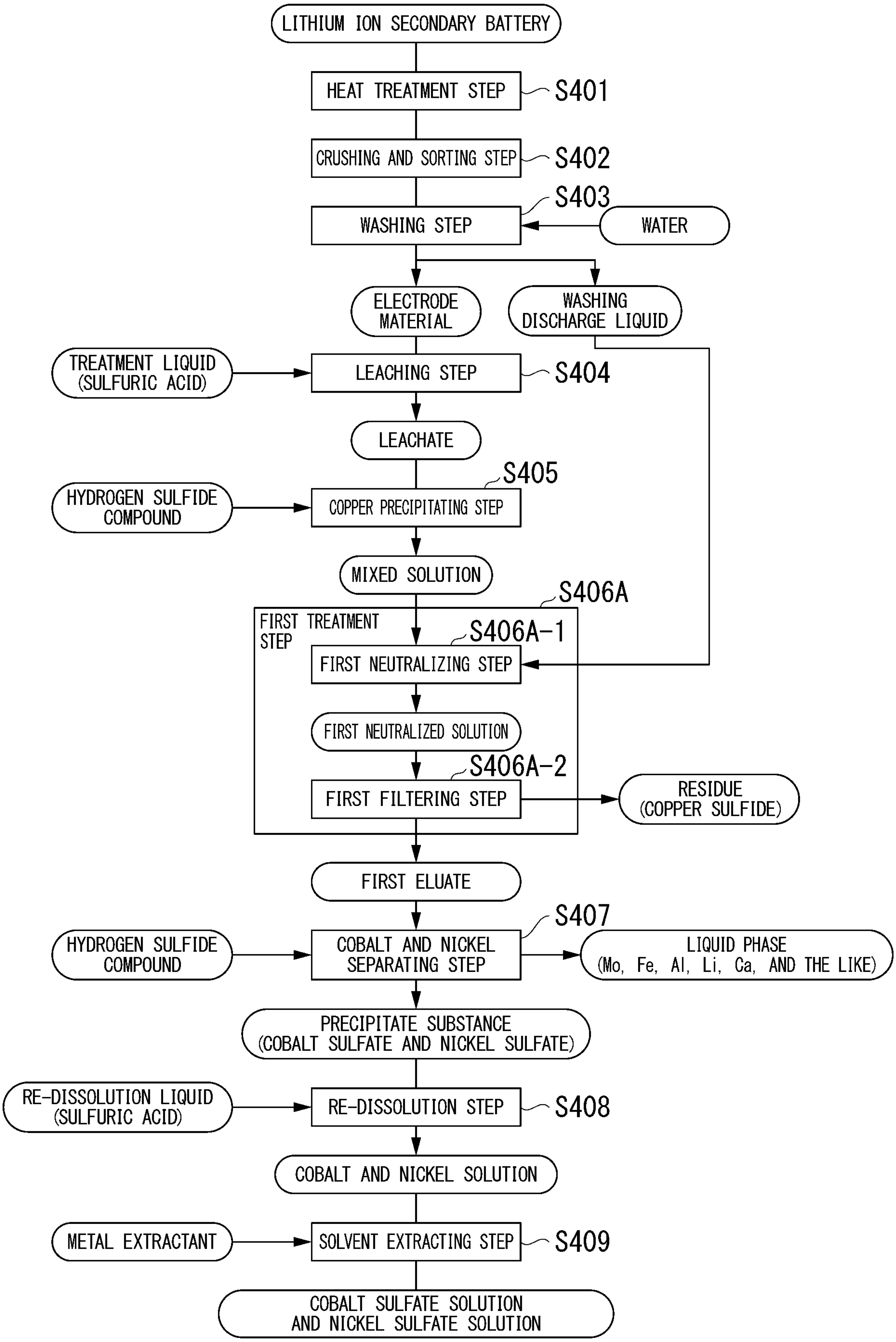
LITHIUM ION SECONDARY BATTERY
HEAT TREATMENT STEP
S401
CRUSHING AND SORTING STEP
S402
S403
WASHING STEP
WATER
ELECTRODE MATERIAL
WASHING DISCHARGE LIQUID
TREATMENT LIQUID (SULFURIC ACID)
LEACHING STEP
S404
LEACHATE
S405
HYDROGEN SULFIDE COMPOUND
COPPER PRECIPITATING STEP
MIXED SOLUTION
S406A
FIRST TREATMENT STEP
S406A-1
FIRST NEUTRALIZING STEP
FIRST NEUTRALIZED SOLUTION
S406A-2
FIRST FILTERING STEP
RESIDUE (COPPER SULFIDE)
FIRST ELUATE
S407
HYDROGEN SULFIDE COMPOUND
COBALT AND NICKEL SEPARATING STEP
LIQUID PHASE (Mo, Fe, Al, Li, Ca, AND THE LIKE)
PRECIPITATE SUBSTANCE (COBALT SULFATE AND NICKEL SULFATE)
RE-DISSOLUTION LIQUID (SULFURIC ACID)
RE-DISSOLUTION STEP
S408
COBALT AND NICKEL SOLUTION
METAL EXTRACTANT
SOLVENT EXTRACTING STEP
S409
COBALT SULFATE SOLUTION AND NICKEL SULFATE SOLUTION

FIG. 10

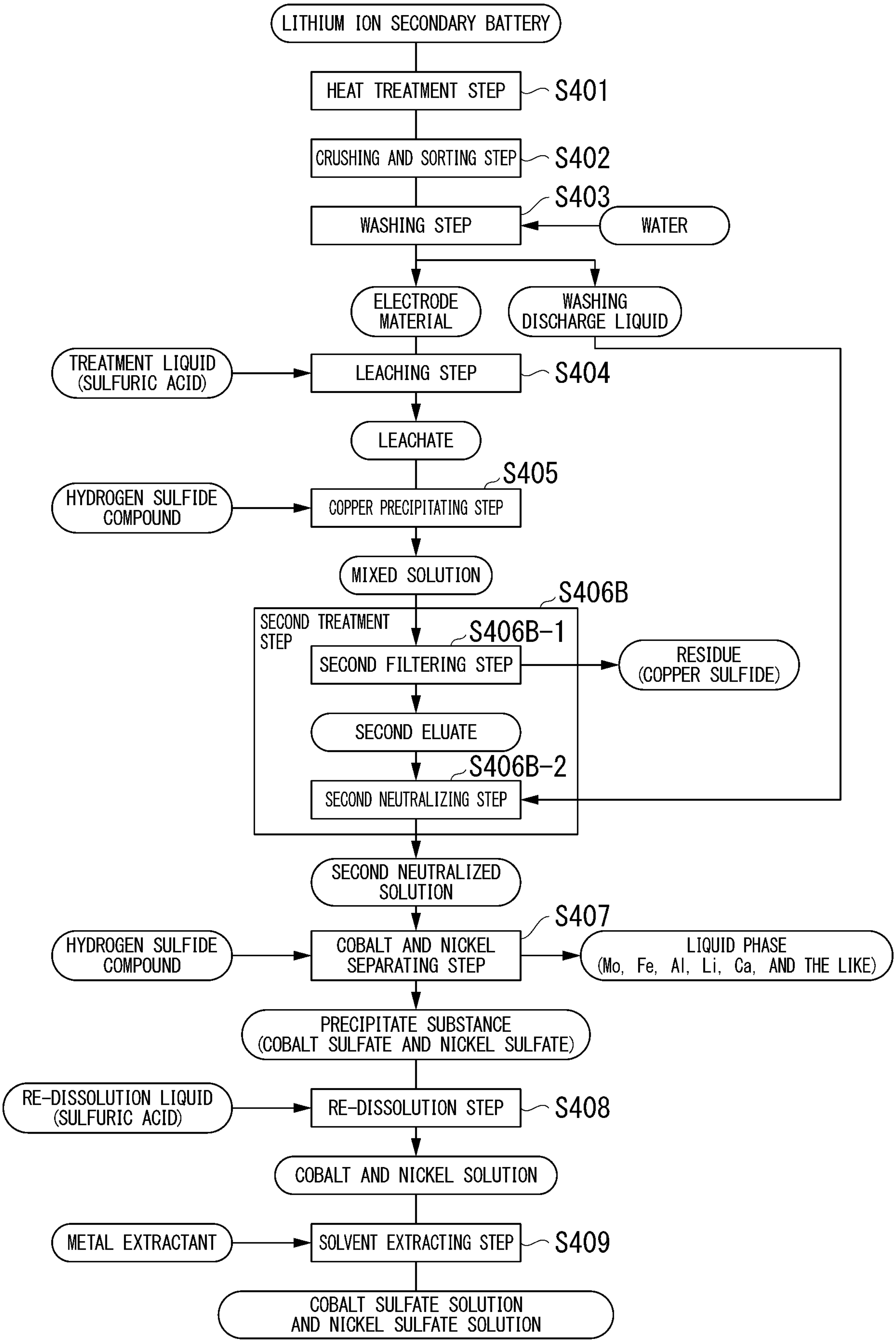
LITHIUM ION SECONDARY BATTERY
HEAT TREATMENT STEP
S401
CRUSHING AND SORTING STEP
S402
S403
WASHING STEP
WATER
ELECTRODE MATERIAL
WASHING DISCHARGE LIQUID
TREATMENT LIQUID (SULFURIC ACID)
LEACHING STEP
S404
LEACHATE
S405
HYDROGEN SULFIDE COMPOUND
COPPER PRECIPITATING STEP
MIXED SOLUTION
S406B
SECOND TREATMENT STEP
S406B-1
SECOND FILTERING STEP
RESIDUE (COPPER SULFIDE)
SECOND ELUATE
S406B-2
SECOND NEUTRALIZING STEP
SECOND NEUTRALIZED SOLUTION
S407
HYDROGEN SULFIDE COMPOUND
COBALT AND NICKEL SEPARATING STEP
LIQUID PHASE (Mo, Fe, Al, Li, Ca, AND THE LIKE)
PRECIPITATE SUBSTANCE (COBALT SULFATE AND NICKEL SULFATE)
RE-DISSOLUTION LIQUID (SULFURIC ACID)
RE-DISSOLUTION STEP
S408
COBALT AND NICKEL SOLUTION
METAL EXTRACTANT
SOLVENT EXTRACTING STEP
S409
COBALT SULFATE SOLUTION AND NICKEL SULFATE SOLUTION

**INTERNATIONAL SEARCH REPORT**

International application No. **PCT/JP2023/013470**

**A. CLASSIFICATION OF SUBJECT MATTER**

***B09B 5/00***(2006.01)i; ***C22B 1/02***(2006.01)i; ***C22B 7/00***(2006.01)i; ***C22B 23/00***(2006.01)i; ***C22B 3/08***(2006.01)i; ***C22B 3/22***(2006.01)i; ***C22B 3/44***(2006.01)i; ***B09B 3/70***(2022.01)i; ***H01M 10/54***(2006.01)i
FI: C22B7/00 C ZAB; B09B3/70 ZAB; B09B5/00 A ZAB; C22B1/02; C22B3/08; C22B3/22; C22B3/44 101A; C22B3/44 101B; C22B23/00 102; H01M10/54

According to International Patent Classification (IPC) or to both national classification and IPC

**B. FIELDS SEARCHED**

Minimum documentation searched (classification system followed by classification symbols)

B09B5/00; C22B1/02; C22B7/00; C22B23/00; C22B3/08; C22B3/22; C22B3/44; B09B3/70; H01M10/54

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2021-512215 A (DUESENFELD GMBH) 13 May 2021 (2021-05-13) claims, paragraphs [0029], [0034]-[0061], [0096]-[0104] | 1<br>2-29 |
| Y | JP 2016-113672 A (SUMITOMO METAL MINING CO) 23 June 2016 (2016-06-23) paragraphs [0100]-[0105] | 2, 4-13, 18-29 |
| Y | JP 2016-3382 A (SUMITOMO METAL MINING CO) 12 January 2016 (2016-01-12) paragraphs [0103]-[0104] | 2, 4-13, 18-29 |
| Y | JP 61-209914 A (NIPPON LIGHT METAL CO LTD) 18 September 1986 (1986-09-18) p. 4, upper left column, lines 10-13, p. 4, lower left column, lines 14-19 | 2, 4-13, 18-29 |
| Y | JP 2019-24421 A (UNIV OSAKA PREFECTURE) 21 February 2019 (2019-02-21) paragraph [0037] | 2, 4-13, 18-29 |
| Y | JP 2012-1750 A (MITSUI MINING & SMELTING CO LTD) 05 January 2012 (2012-01-05) claims, paragraphs [0017], [0021], [0036]-[0040] | 3-8, 11-29 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 June 2023** | **20 June 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2023/013470**

**C. DOCUMENTS CONSIDERED TO BE RELEVANT**

| Category* | Citation of document, with indication, where appropriate, of the relevant passages | Relevant to claim No. |
|---|---|---|
| Y | JP 2014-19909 A (SUMITOMO METAL MINING CO) 03 February 2014 (2014-02-03) abstract, claims, paragraphs [0001], [0057]-[0060] | 3, 4-8, 14-29 |
| Y | WO 2022/050248 A1 (MITSUBISHI MATERIALS CORP) 10 March 2022 (2022-03-10) claims, paragraphs [0031]-[0032], [0040], [0050]-[0054], [0068] | 5-8, 11-13, 18-29 |
| Y | WO 2013/114621 A1 (SUMITOMO METAL MINING CO) 08 August 2013 (2013-08-08) paragraphs [0024]-[0029], [0044]-[0046] | 20-29 |

Form PCT/ISA/210 (second sheet) (January 2015)

**INTERNATIONAL SEARCH REPORT**
**Information on patent family members**

International application No.
**PCT/JP2023/013470**

| Patent document cited in search report | Publication date (day/month/year) | Patent family member(s) | Publication date (day/month/year) |
|---|---|---|---|
| JP 2021-512215 A | 13 May 2021 | US 2021/0032721 A1<br>claims, paragraphs [0029], [0035]-[0062], [0096]-[0111]<br>WO 2019/149698 A1<br>EP 3517641 A1<br>CN 111655875 A<br>KR 10-2020-0113246 A | |
| JP 2016-113672 A | 23 June 2016 | (Family: none) | |
| JP 2016-3382 A | 12 January 2016 | (Family: none) | |
| JP 61-209914 A | 18 September 1986 | (Family: none) | |
| JP 2019-24421 A | 21 February 2019 | (Family: none) | |
| JP 2012-1750 A | 05 January 2012 | (Family: none) | |
| JP 2014-19909 A | 03 February 2014 | (Family: none) | |
| WO 2022/050248 A1 | 10 March 2022 | JP 2022-42982 A<br>TW 202221145 A | |
| WO 2013/114621 A1 | 08 August 2013 | US 2014/0377154 A1<br>paragraphs [0033]-[0038], [0053]-[0055]<br>EP 2811040 A1<br>CN 104080932 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2022059890 A
- JP 2022059909 A
- JP 2022059918 A
- JP 2022060254 A
- JP 2015183292 A
- JP 2014019909 A
- JP 2007122885 A